# EUROPÄISCHE PATENTSCHRIFT

(11) **EP 3 443 831 B1**
(45) Veröffentlichungstag und Bekanntmachung des Hinweises auf die Patenterteilung: **10.03.2021**
(21) Anmeldenummer: 18185567.7
(22) Anmeldetag: 25.07.2018
(51) Int. Cl.: A01C 7/04, A01B 73/04, A01C 7/20

(54) **LANDWIRTSCHAFTLICHE REIHENEINHEIT ZUM VERTEILEN VON KÖRNERN**
AGRICULTURAL ROW UNIT FOR DISTRIBUTING GRAINS
UNITÉ DE RANGÉE AGRICOLE DESTINÉE À LA DISTRIBUTION DE GRAINS

(30) Priorität: 07.08.2017 DE 102017117841
(43) Veröffentlichungstag der Anmeldung: 20.02.2019
(73) Patentinhaber: Horsch Maschinen GmbH, 92421 Schwandorf (DE)
(72) Erfinder: PIRKENSEER, Manfred, 92421 Schwandorf (DE)
(74) Vertreter: v. Bezold & Partner Patentanwälte - PartG mbB

(56) Entgegenhaltungen:
- EP-A1- 2 289 295
- EP-B1- 3 041 342
- WO-A1-2011/118472
- DE-A1-102015 101 256
- DE-T5-112011 102 141
- US-A1- 2015 059 627

## Beschreibung

Die Erfindung betrifft eine Reiheneinheit, vorzugsweise eine Reiheneinheit zur Montage an eine Trägerkonstruktion eines mobilen landwirtschaftlichen Arbeitsgeräts, insbesondere zum Ziehen der Reiheneinheit, wobei die Reiheneinheit insbesondere zum Verteilen von Körnern (z. B. Saatgut) dient.

Zum Stand der Technik kann zunächst auf die DE 10 2015 101256 A1 verwiesen werden, die ein Dosiersystem einer Reiheneinheit einer landwirtschaftlichen Maschine zur vereinzelten Abgabe von Körnern wie Saatgut und /oder Dünger offenbart, wobei der Reiheneinheit zur Vereinzelung der Körner ein Dosiersystem bestehend aus wenigstens zwei Dosiervorrichtungen zugeordnet ist, welche wenigstens zwei Dosiervorrichtungen jeweils eine oder eine gemeinsame Kammer zur Aufnahme der auszubringenden Körner aufweisen. Des Weiteren kann zum Stand der Technik auf die EP 3 041 342 B1, WO 2011/118472 A1**,** EP 2 289 295 A1 und die US 2015/059627 A1 verwiesen werden.

Aus dem Stand der Technik sind bereits verschiedenste landwirtschaftliche Reiheneinheiten mit Vereinzelungsaggregaten (Dosieraggregaten) bekannt, mittels denen jeweils Körner, z. B. Saatgut, in vereinzelter Form über ein Saatrohr in eine Saatfurche im Boden abgegeben werden. In einer Ausführungsform sind hierfür an einer quer zur Saatfurche verlaufenden Trägerkonstruktion eines mobilen Arbeitsgeräts eine Vielzahl von in regelmäßigen Abständen angeordnete Reiheneinheiten angebracht, wobei jede Reiheneinheit jeweils ein Vereinzelungsaggregat aufweist.

Eine wie zuvor beschriebene Anordnung geht z. B. aus der WO 2010 059 101 A1 hervor, wobei die Vereinzelungsaggregate jeweils eine Kammer aufweisen, in denen sich die jeweils auszubringenden Körner befinden. An die Kammern schließen jeweils Saatrohre an, über welche die Körner jeweils vereinzelt in eine Saatfurche geleitet werden. Als Vereinzelungsorgane dienen Vereinzelungsscheiben, die jeweils parallel zur Mittelachse der Reiheneinheiten und somit parallel zur Verfahrrichtung der Reiheneinheiten ausgerichtet sind.

Da derartige Anordnungen aus Wirtschaftlichkeits- und Effektivitätsgründen üblicherweise große Arbeitsbreiten aufweisen, ist deren Trägerkonstruktion zur Breitenreduzierung in eine Nicht-Betriebsposition verschwenkbar, wobei ein linker Träger der Trägerkonstruktion zur einen Seite verschwenkbar ist und ein rechter Träger der Trägerkonstruktion zur anderen Seiten verschwenkbar ist. Dadurch kann eine für eine Straßenfahrt zulässige oder mögliche Transportbreite realisiert werden. Hierzu sind im Stand der Technik bereits unterschiedliche Schwenkvarianten bekannt, die z. B. ein Einklappen und/oder Hochklappen der Träger der Trägerkonstruktion mitsamt der Reiheneinheiten ermöglichen.

Durch die Verschwenkungen in unterschiedliche Richtungen besteht jedoch das Problem, dass, während die Reiheneinheiten in die Nicht-Betriebsposition verschwenkt werden und/oder wenn die Reiheneinheiten in der endgültigen Nicht-Betriebsposition für die Straßenfahrt angeordnet sind, Körner aus den Kammern über die Saatrohre ungewollt entweichen können.

Zur Lösung des Problems ist es bekannt, an einen linken Träger der Trägerkonstruktion eine linke Ausführungsvariante der Reiheneinheiten zu montieren, und an einen rechten Träger der Trägerkonstruktion eine rechte Ausführungsvariante der Reiheneinheiten zu montieren. Die linke Ausführungsvariante und die rechte Ausführungsvariante sind unterschiedlich, so dass in Abhängigkeit der Verschwenkungsrichtung keine Körner aus der Kammer in Folge der Verschwenkung ungewollt über das Saatrohr entweichen können. Insbesondere sind hierzu die Vereinzelungsaggregate der linken Reiheneinheiten und die Vereinzelungsaggregate der rechten Reiheneinheiten jeweils um ihre senkrechte Achse um 180° gedreht oder gespiegelt, um somit eine linke Ausführungsvariante und eine rechte Ausführungsvariante zu erhalten. Damit kann das zuvor genannte Problem gelöst werden. Die Funktionsweise der linken Reiheneinheiten, insbesondere deren Vereinzelungsaggregate, und die Funktionsweise der rechten Reiheneinheiten, insbesondere deren Vereinzelungsaggregate, sind dabei generell gleich.

Durch die "linke" und "rechte" Ausführungsvariante der Reiheneinheiten erhöht sich jedoch nachteilig die Teilevielfalt, insbesondere erhöhen sich z. B. die Varianten an Vereinzelungsaggregaten, Saatrohren, Reiheneinheiten etc.

Eine Aufgabe der Erfindung ist es, eine verbesserte und/oder alternative Reiheneinheit zu schaffen, insbesondere eine Reiheneinheit, mittels der eine Erhöhung der Teilevielfalt vermieden oder zumindest reduziert werden kann.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Reiheneinheit, vorzugsweise eine Reiheneinheit zur Montage an eine Trägerkonstruktion eines mobilen landwirtschaftlichen Arbeitsgeräts. Das Arbeitsgerät kann z. B. angetrieben sein und somit z. B. ein Kraftfahrzeug darstellen, oder nicht angetriebenen sein und somit z. B. einen Anhänger darstellen.

Das Arbeitsgerät dient vorzugsweise zum Ziehen der Reiheneinheit zweckmäßig entlang einer Verfahrrichtung.

Die Reiheneinheit dient in Betriebsposition zum Verteilen von Körnern (z. B. Saatgut) zweckmäßig auf einen Boden, insbesondere in eine Furche im Boden.

Die Reiheneinheit umfasst insbesondere zumindest ein Vereinzelungsaggregat (z. B. Dosieraggregat). Das Vereinzelungsaggregat umfasst zweckmäßig eine Kammer mit einem Aufnahmebereich zur Aufnahme der Körner und eine um eine Drehachse drehbare, z. B. im Wesentlichen tellerförmige oder im Wesentlichen insgesamt ebene, Vereinzelungsscheibe (z. B. Dosierscheibe). Die Vereinzelungsscheibe dient zum Vereinzeln der Körner. Alternativ oder ergänzend dient die Vereinzelungsscheibe z. B. zum Transportieren der Körner von dem Aufnahmebereich insbesondere zu einem Ausgabebereich. Der Ausgabebereich kann vorzugsweise zum Ausgeben der Körner aus dem Vereinzelungsaggregat dienen, z. B. über ein Abgaberohr, zweckmäßig hin zum Boden.

Die Reiheneinheit zeichnet sich z. B. dadurch aus, dass die Vereinzelungsscheibe und vorzugsweise das Vereinzelungsaggregat relativ zu einer Bezugsachse schräg ausgerichtet ist.

Die Bezugsachse erstreckt sich in Längsrichtung der Reiheneinheit zweckmäßig durch die Reiheneinheit und verläuft in Betriebsposition der Reiheneinheit zweckmäßig im Wesentlichen parallel zur Verfahrrichtung, insbesondere parallel zur Zug- oder Rollrichtung, der Reiheneinheit. Alternativ oder ergänzend ist es möglich, dass die Bezugsachse z. B. einer Mittelachse der Reiheneinheit entspricht und/oder sich in Betriebsposition der Reiheneinheit horizontal erstreckt. Ebenfalls alternativ oder ergänzend kann die Bezugsachse z. B. die Drehachse und/oder den Drehmittelpunkt der Vereinzelungsscheibe schneiden.

Es ist somit im Rahmen der Erfindung insbesondere möglich, dass die Vereinzelungsscheibe, zweckmäßig das Vereinzelungsaggregat per se, in einem Winkel (z. B. größer 5°) schräg zur Bezugsachse ausgerichtet ist.

Dadurch kann ermöglicht werden, dass das Vereinzelungsaggregat, trotz Verschwenken von einer Betriebsposition in eine Nicht-Betriebsposition zur Breitenreduzierung der Trägerkonstruktion, keine Position einnimmt, in der Körner ungewollt aus der Kammer, z. B. aus dem Ausgabebereich und/oder über den Ausgabebereich, entweichen können, und zwar insbesondere unabhängig davon, ob die Reiheneinheit zu einer ersten Seite (z. B. mit einem Anteil nach links) oder zu einer zweiten Seite (z. B. mit einem Anteil nach rechts) verschwenkt wird, also insbesondere unabhängig davon, ob die Reiheneinheit an einem Träger auf der einen Seite (z. B. links) der Trägerkonstruktion oder an einem Träger auf der anderen Seite (z. B. rechts) der Trägerkonstruktion montiert wird.

Das Verschwenken zur ersten Seite und das Verschwenken zur zweiten Seite umfasst vorzugsweise ein Verschwenken in entgegengesetzte Richtungen.

In einer Betriebsposition der Reiheneinheit ist die Reiheneinheit insbesondere ausgerichtet, um die Körner auf dem Boden verteilen zu können.

Eine Nicht-Betriebsposition der Reiheneinheit umfasst insbesondere eine oder mehrere von der Betriebsposition abweichende Ausrichtungen (z. B. Positionen), die z. B. zur Breitenreduzierung der Trägerkonstruktion erforderlich werden, vorzugsweise um eine Straßenfahrt des Arbeitsgeräts zu ermöglichen.

Eine Nicht-Betriebsposition kann z. B. eine Nicht-Betriebs-Endposition für einen Straßentransport umfassen, wobei die Reiheneinheit in der Nicht-Betriebs-Endposition vorzugsweise im Wesentlichen maximal verschwenkt sein kann. Eine Nicht-Betriebsposition kann alternativ oder ergänzend auch z. B. Ausrichtungen umfassen, die sich während eines Verschwenkvorgangs der Reiheneinheit von der Betriebsposition in die Nicht-Betriebs-Endposition ergeben oder umgekehrt.

Das Vereinzelungsaggregat weist nur eine einzige Vereinzelungsscheibe auf.

Die Vereinzelungsscheibe ist in Betriebsposition der Reiheneinheit vorzugsweise im Wesentlichen vertikal stehend ausgerichtet, z. B. in einem Toleranzbereich von plus/minus 5°.

Es ist möglich, dass die Vereinzelungsscheibe nicht parallel zur Bezugsachse ausgerichtet ist.

Alternativ oder ergänzend kann die Drehachse zweckmäßig schräg, und somit vorzugsweise nicht rechtwinklig, zur Bezugsachse verlaufen.

Die Drehachse der Vereinzelungsscheibe erstreckt sich vorzugsweise im Wesentlichen rechtwinklig zur Vereinzelungsscheibe.

Die Vereinzelungsscheibe kann z. B. relativ zu der Bezugsachse mit einem Winkel in einem Winkelbereich zwischen 5° und 60°, zwischen 5° und 45° oder zwischen 5° und 30° schräg ausgerichtet sein, vorzugsweise einen Winkel zwischen 10° und 25° aufweisen. Alternativ oder ergänzend kann z. B. die Drehachse mit einem Winkel in einem Winkelbereich zwischen 85° und 30°, zwischen 85° und 45° oder zwischen 85° und 60° schräg ausgerichtet sein, vorzugsweise einen Winkel zwischen 80° und 65° aufweisen.

Es ist möglich, dass trotz Verschwenken der Reiheneinheit zweckmäßig von einer Betriebsposition in eine Nicht-Betriebsposition das Vereinzelungsaggregat keine Position einnimmt, in der Körner aus der Kammer, z. B. aus dem Ausgabebereich und/oder über den Ausgabebereich, ungewollt entweichen, und zwar z. B. unabhängig davon, ob die Reiheneinheit zu einer ersten Seite (z. B. mit einem "Linksanteil") in eine Nicht-Betriebsposition verschwenkt wird oder zur einer zweiten Seite (z. B. mit einem "Rechtsanteil") in eine Nicht-Betriebsposition verschwenkt wird.

Das Verschwenken zur ersten Seite und das Verschwenken zur zweiten Seite umfassen z. B. ein Verschwenken um eine im Wesentlichen parallel zur Bezugsachse verlaufende Schwenkachse (zweckmäßig in einem Toleranzbereich von +/- 10°) und/oder um eine im Wesentlichen parallel zur Querrichtung der Reiheneinheit verlaufende Schwenkachse (zweckmäßig in einem Toleranzbereich von +/- 10°). Alternativ oder ergänzend kann das Verschwenken zur ersten Seite und das Verschwenken zur zweiten Seite ein Verschwenken um z. B. mehr als 80° umfassen, vorzugsweise ein Verschwenken um im Wesentlichen 90°. Das Verschwenken zur ersten Seite und das Verschwenken zur zweiten Seite kann ebenfalls alternativ oder ergänzend vorzugsweise ein Verschwenken in entgegengesetzte Richtungen umfassen.

Es ist möglich, dass das Vereinzelungsaggregat eine Kammerwand aufweist, die z. B. im Wesentlichen parallel zur Vereinzelungsscheibe angeordnet sein kann.

Die Kammer kann, zumindest abschnittsweise, z. B. einerseits durch die Vereinzelungsscheibe begrenzt werden und/oder andererseits durch die Kammerwand begrenzt werden.

Die Kammerwand ist vorzugsweise perforiert, so dass z. B. Luft hindurchtreten kann, aber vorzugsweise keine Körner.

Es ist möglich, dass die Reiheneinheit, vorzugsweise zu einer ersten Seite, in eine Nicht-Betriebsposition verschwenkbar ist, in der die Vereinzelungsscheibe als hin zum Ausgabebereich aufsteigende Rampe für die Körner dient, um vorzugsweise ein ungewolltes Entweichen von Körnern aus der Kammer, z. B. aus dem und/oder über den Ausgabebereich, zu verhindern, z. B. während die Reiheneinheit in die Nicht-Betriebs-Endposition verschwenkt wird und/oder wenn die Reiheneinheit in der Nicht-Betriebs-Endposition angeordnet ist.

Alternativ oder ergänzend ist es möglich, dass die Reiheneinheit, vorzugsweise zu einer zweiten Seite, in eine Nicht-Betriebsposition verschwenkbar ist, in der die Kammerwand als hin zum Ausgabebereich abfallende Rampe für die Körner dient, z. B. während die Reiheneinheit in die Nicht-Betriebs-Endposition verschwenkt wird und/oder wenn die Reiheneinheit in der Nicht-Betriebs-Endposition angeordnet ist.

Das Vereinzelungsaggregat kann z. B. einen Steg aufweisen.

Der Steg dient vorzugsweise dazu, um in einer Nicht-Betriebsposition ein ungewolltes Entweichen von Körnern aus der Kammer, z. B. aus dem und/oder über den Ausgabebereich , zu verhindern, z. B. während die Reiheneinheit in die Nicht-Betriebs-Endposition verschwenkt wird und/oder wenn die Reiheneinheit in der Nicht-Betriebs-Endposition angeordnet ist. Der Steg dient hierbei vorzugsweise als zusätzliche Absicherung, wobei, wie zuvor erwähnt, bereits die Schrägstellung der Vereinzelungsscheibe vorzugsweise letztgenannte Funktion zumindest im Wesentlichen übernehmen kann.

Der Steg kann z. B. zumindest eines der folgenden Merkmale aufweisen: Der Steg ist in Drehrichtung der Vereinzelungsscheibe vor dem Ausgabebereich angeordnet. Der Steg erstreckt sich in der Kammer, vorzugsweise zwischen der Vereinzelungsscheibe und der Kammerwand. Der Steg ist zumindest abschnittsweise von der Vereinzelungsscheibe beabstandet, um einen Durchlass für Körner zu ermöglichen. Der Steg dient in einer Nicht-Betriebsposition als Blockaderiegel für die Körner. Der Steg dient, zweckmäßig in Betriebsposition der Reiheneinheit, zur Erzeugung einer Reduzierung einer Druckdifferenz in der Kammer, wodurch z. B. ein Lösen der Körner von den Aussparungen der Vereinzelungsscheibe ermöglicht werden kann.

Es ist möglich, dass die Reiheneinheit in eine Nicht-Betriebsposition, vorzugsweise eine Nicht-Betriebs-Endposition, verschwenkbar ist, in der sie im Wesentlichen horizontal liegend (z. B. in einem Toleranzbereich von plus/minus 15°) ausgerichtet ist, so dass vorzugsweise die Bezugsachse ebenfalls im Wesentlichen horizontal verläuft (z. B. in einem Toleranzbereich von plus/minus 15°).

Alternativ oder ergänzend kann die Reiheneinheit in eine Nicht-Betriebsposition, vorzugsweise eine Nicht-Betriebs-Endposition, verschwenkbar sein, in der im Wesentlichen vertikal stehend (z. B. in einem Toleranzbereich von plus/minus 15°) ausgerichtet ist, so dass vorzugsweise die Bezugsachse ebenfalls im Wesentlichen vertikal verläuft (z. B. in einem Toleranzbereich von plus/minus 15°).

Es ist möglich, dass das Vereinzelungsaggregat einen Druckluftanschluss zur Einführung von positiver Druckluft oder negativer Druckluft in das Vereinzelungsaggregat aufweist. Bei der Einführung von positiver Druckluft arbeitet das Vereinzelungsaggregat vorzugsweise als Überdrucksystem. Bei der Einführung von negativer Druckluft arbeitet das Vereinzelungsaggregat vorzugsweise als Vakuumsystem. Die Reiheneinheit kann hierzu z. B. mit einer Druckluftquelle in Verbindung stehen, die z. B. Teil der Reiheneinheit oder separat zur Reiheneinheit zur Verfügung gestellt sein kann. Es ist aber auch möglich, dass das Vereinzelungsaggregat z. B. rein Fliehkraft-basiert arbeitet.

Es ist möglich, dass Druckluft zweckmäßig aus der Kammer über den Ausgabebereich entweichen kann, so dass die vereinzelten Körner Druckluft-beaufschlagt, zweckmäßig Druckluft-beschleunigt, und somit gegenüber freiem Fall schneller vom Ausgabebereich hin zum Boden transportierbar sind. Dabei ist es möglich, aber nicht zwingend, dass die Druckluft derart bemessen ist, dass sie über einen Auslass des Abgaberohrs entweicht.

Die Vereinzelungsscheibe kann z. B. eine Vielzahl von Aussparungen (z. B. Durchgangslöcher, Vertiefungen, Einkerbungen, Mulden etc.) für die Körner aufweisen, wobei die Körner Druckluft-beaufschlagt in den Aussparungen gehalten werden können. Dadurch kann vorzugsweise die Vereinzelungsscheibe die Körner Druckluft-unterstützt halten, vereinzeln und/oder vom Aufnahmebereich zum Ausgabebereich transportieren. Die Aussparungen sind z. B. in Umfangsrichtung der Vereinzelungsscheibe gleichmäßig voneinander beabstandet.

Die Reiheinheit kann z.B. zumindest eines von Folgenden umfassen: Eine Montageeinrichtung, vorzugsweise eine Schwenk- und/oder Parallelogramm-Montagekonstruktion, zur beweglichen Montage an eine Trägerkonstruktion eines mobilen landwirtschaftlichen Arbeitsgeräts. Ein Abgaberohr, z. B. Saatrohr, zur Verbindung mit dem Ausgabebereich und zum Abgeben vereinzelter Körner auf den Boden, vorzugsweise in eine Furche im Boden. Eine Furchen-erzeugende Einrichtung zur Erzeugung einer Furche im Boden. Eine Fang- oder Abbrems-Einrichtung zum Fangen oder Abbremsen von aus dem Abgaberohr ausgegebener vereinzelter Körner. Eine Einrichtung zum Schließen der mit Körnern versehenen Furche und/oder zum Andrücken vereinzelter Körner in den Boden, insbesondere in eine Furche im Boden. Einen Vorratsbehälter für Körner, der oberhalb des Vereinzelungsaggregats montierbar ist und/oder zur Versorgung des Aufnahmebereichs mit Körnern dient. Alternativ oder ergänzend sind aber auch Ausführungsformen mit einem zweckmäßig zentralen Vorratsbehälter für Körner (z. B. sogenannte Seed-on-Demand-Systeme) möglich, wobei der Vorratsbehälter zur Versorgung mehrerer Reiheneinheiten mit Körnern dient. Dadurch kann z. B. ermöglicht werden, dass die Reiheneinheit selbst keinen Vorratsbehälter aufweisen muss.

Es ist möglich, dass ein Einlass des Abgaberohrs und ein Auslass des Abgaberohrs in Querrichtung der Reiheneinheit versetzt zueinander angeordnet sind und/oder eine Mittelachse des Abgaberohrs sich zumindest abschnittsweise in drei Dimensionen vom Einlass zum Auslass des Abgaberohrs erstreckt. Die Mittelachse des Abgaberohrs kann sich folglich vorzugsweise nicht ausschließlich in nur einer einzigen Ebene erstrecken.

Zu erwähnen ist, dass die Bezugsachse vorzugsweise parallel zur Längs- und/oder Mittelachse der Reiheneinheit und/oder parallel zur Verfahrrichtung der Reiheneinheit in Betriebsposition verlaufen kann.

Zu erwähnen ist außerdem, dass der Winkel, um welches das Vereinzelungsaggregat und/oder die Vereinzelungsscheibe gedreht wird, sich z. B. ergibt aus der Lage der Einlassöffnung für die Körner in die Kammer, der Abmessung der Kammer, dem Winkel der Vereinzelungsscheibe, dem Abstand zum Ausgabebereich und/oder dem Klapp-/Verschwenkwinkel der Trägerkonstruktion. Ein großes Vereinzelungsaggregat kann zweckmäßig zu kleinen Winkeln führen, wohingegen ein kleines Vereinzelungsaggregat insbesondere zu großen Winkeln führen kann.

Zu erwähnen ist darüber hinaus, dass das Merkmal "verschwenken", "verschwenkbar", "Schwenkachse", usw. im Kontext der Erfindung vorzugsweise breit auszulegen ist und z. B. ein Verschwenken um eine oder mehrere Achsen umfassen kann und alternativ oder ergänzend auch zweckmäßig ein Drehen um eine oder mehrere Achsen umfassen kann.

Die Erfindung ist nicht auf eine Reiheneinheit beschränkt, sondern umfasst auch eine Trägerkonstruktion, vorzugsweise eine Trägerkonstruktion eines mobilen landwirtschaftlichen, z. B. angetriebenen oder nicht angetriebenen, Arbeitsgeräts, mit einem vorzugsweise verschwenkbaren ersten Träger auf der einen Seite (z. B. "links") und einem vorzugsweise verschwenkbaren zweiten Träger auf der anderen Seite (z. B. "rechts"), wobei der erste Träger eine Vielzahl von Reiheneinheiten wie hierin offenbart aufweist und der zweite Träger eine Vielzahl von Reiheneinheiten wie hierin offenbart aufweist.

Es ist möglich, dass die Vereinzelungsaggregate der Reiheneinheiten des ersten Trägers und die Vereinzelungsaggregate der Reiheinheiten des zweiten Trägers zumindest in Bezug auf die Vereinzelungsscheiben, die Kammern, die Kammerwände und/oder die Stege baugleich ausgeführt sind. Die Vereinzelungsscheiben, die Kammerwände und/oder die Stege der Vereinzelungsaggregate der Reiheneinheiten des ersten Trägers und des zweiten Trägers sind hierbei vorzugsweise nicht um ihre senkrechte Achse um z. B. 180° gedreht, wie z. B. in der Beschreibungseinleitung zum Stand der Technik erwähnt.

Darüber hinaus können die Reiheneinheiten des ersten Trägers und die Reiheneinheiten des zweiten Trägers z. B. in Bezug auf die Abgaberohre, die Ausgabebereiche und/oder die Ein- und Auslässe der Abgaberohre baugleich ausgeführt sein und vorzugsweise ebenfalls nicht gespiegelt und/oder nicht um ihre senkrechte Achse um z. B. 180° gedreht sein.

Es ist möglich, dass der erste Träger und der zweite Träger zur Breitenreduzierung der Trägerkonstruktion mittels zumindest eines Schwenkvorgangs verschwenkbar (z. B. seitlich einklappbar und/oder hochklappbar) sind, so dass dadurch die einzelnen Reiheneinheiten des ersten Trägers und die Reiheneinheiten des zweiten Trägers in eine Nicht-Betriebsposition gebracht werden können. Trotz des Verschwenkvorgangs nehmen die Vereinzelungsaggregate des ersten Trägers und die Vereinzelungsaggregate des zweiten Trägers insbesondere wegen der Schrägstellung der einzelnen Vereinzelungsscheiben vorzugsweise keine Position ein, in der Körner aus den einzelnen Kammern, z. B. aus den Ausgabebereichen und/oder über die Ausgabebereiche, ungewollt entweichen können.

Wie bereits erwähnt, ermöglicht die Breitenreduzierung eine für eine Straßenfahrt zulässige oder mögliche Transportbreite der Trägerkonstruktion.

Die Vereinzelungsscheiben der einzelnen Reiheneinheiten des ersten Trägers können z. B. in einer Nicht-Betriebsposition als hin zu den einzelnen Ausgabebereichen aufsteigende Rampen für die Körner dienen, vorzugsweise, um in einer Nicht-Betriebsposition ein ungewolltes Entweichen von Körnern aus den Kammern, z. B. aus den Ausgabebereichen und/oder über die Ausgabebereiche, zu verhindern. Alternativ oder ergänzend ist es möglich, dass die Kammerwände der einzelnen Reiheneinheiten des zweiten Trägers in einer Nicht-Betriebsposition als hin zu den einzelnen Ausgabebereichen absteigende Rampen für die Körner dienen.

Es ist möglich, dass in einer Nicht-Betriebsposition die einzelnen Reiheneinheiten des ersten Trägers, z. B. im Wesentlichen exakt oder seitlich und/oder höhenmäßig versetzt, übereinander anordbar sind und die einzelnen Reiheneinheiten des zweiten Trägers, z. B. im Wesentlichen exakt oder seitlich und/oder höhenmäßig versetzt, übereinander anordbar sind.

Alternativ oder ergänzend sind z. B. in einer Nicht-Betriebsposition die einzelnen Reiheneinheiten des ersten Trägers und die einzelnen Reiheneinheiten des zweiten Trägers im Wesentlichen horizontal liegend ausrichtbar (z. B. in einem Toleranzbereich von plus/minus 15°), so dass vorzugsweise deren Bezugsachsen ebenfalls im Wesentlichen horizontal verlaufen (z. B. in einem Toleranzbereich von plus/minus 15°).

Ebenfalls alternativ oder ergänzend können in der Nicht-Betriebsposition die einzelnen Reiheneinheiten des ersten Trägers und die einzelnen Reiheneinheiten des zweiten Trägers um im Wesentlichen parallel zu den Bezugsachsen verlaufende Schwenkachsen verschwenkt sein, z. B. um mehr als 80°, vorzugsweise um im Wesentlichen 90°.

Es ist möglich, dass in einer Nicht-Betriebsposition die einzelnen Reiheneinheiten des ersten Trägers, z. B. im Wesentlichen exakt oder seitlich und/oder höhenmäßig versetzt, hintereinander anordbar sind und die einzelnen Reiheneinheiten des zweiten Trägers, z. B. im Wesentlichen exakt oder seitlich und/oder höhenmäßig versetzt, hintereinander anordbar sind.

Alternativ oder ergänzend sind in einer Nicht-Betriebsposition z. B. die einzelnen Reiheneinheiten des ersten Trägers und die einzelnen Reiheneinheiten des zweiten Trägers im Wesentlichen vertikal stehend ausrichtbar (z. B. in einem Toleranzbereich von plus/minus 15°), so dass vorzugsweise deren Bezugsachsen ebenfalls im Wesentlichen vertikal verlaufen (z. B. in einem Toleranzbereich von plus/minus 15°).

Ebenfalls alternativ oder ergänzend können in der Nicht-Betriebsposition die einzelnen Reiheneinheiten des ersten Trägers und die einzelnen Reiheneinheiten des zweiten Trägers um im Wesentlichen parallel zur Querrichtung verlaufende Schwenkachsen verschwenkt sein, z. B. um mehr als 80°, vorzugsweise um im Wesentlichen 90°.

Zu erwähnen ist noch, dass die Reiheneinheiten des ersten Trägers und die Reiheneinheiten des zweiten Trägers z. B. gleichmäßig voneinander beabstandet sind und/oder zweckmäßig zumindest in Betriebsposition im Wesentlichen parallel zueinander angeordnet sind.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Perspektivansicht von Reiheneinheiten an einer Trägerkonstruktion eines mobilen landwirtschaftlichen Arbeitsgeräts gemäß einer Ausführungsform der Erfindung in einer Nicht-Betriebsposition,
- Figur 2A: zeigt eine Ansicht von hinten einer Reiheneinheit der Figur 1 an der einen Seite der Trägerkonstruktion,
- Figur 2B: zeigt eine Draufsicht auf die Reiheneinheit der Figur 2A,
- Figur 3A: zeigt eine Ansicht von hinten einer Reiheneinheit der Figur 1 an der anderen Seite der Trägerkonstruktion,
- Figur 3B: zeigt eine Draufsicht auf die Reiheneinheit der Figur 3A,
- Figur 4A: zeigt eine Perspektivansicht von Reiheneinheiten an einer Trägerkonstruktion eines mobilen landwirtschaftlichen Arbeitsgeräts gemäß einer anderen Ausführungsform der Erfindung in einer Nicht-Betriebsposition,
- Figur 4B: zeigt eine Vorderansicht der Reiheneinheiten, der Trägerkonstruktion und des Arbeitsgeräts der Figur 4A,
- Figur 5: zeigt eine Seitenansicht (Teilschnitt) eines Vereinzelungsaggregats mit Abgaberohr gemäß einer Ausführungsform der Erfindung,
- Figur 6: zeigt eine andere Seitenansicht (Schnitt/Teilschnitt) des Vereinzelungsaggregats mit Abgaberohr der Figur 5,
- Figur 7A: zeigt eine Seitenansicht einer Reiheneinheit gemäß einer Ausführungsform der Erfindung, ausgerichtet in einer Betriebsposition,
- Figur 7B: zeigt eine Ansicht von hinten der Reiheneinheit der Figur 7A,
- Figur 8: zeigt eine Draufsicht auf die Reiheneinheit der Figur 7A,
- Figur 9: zeigt eine Seitenansicht eines Vereinzelungsaggregats mit Abgaberohr und Vorratsbehälter gemäß einer Ausführungsform der Erfindung,
- Figur 10A: zeigt eine Teil-Schnittansicht gemäß Linie A-A der der Figur 9 in einer zur einen Seite hin verschwenkten Nicht-Betriebsposition,
- Figur 10B: zeigt eine Schnittansicht gemäß Linie A-A der Figur 9 in einer zur einen Seite hin verschwenkten Nicht-Betriebsposition, wobei zusätzlich ein Gehäuse des Vereinzelungsaggregats teilweise geschnitten ist,
- Figur 11A: zeigt eine Teil-Schnittansicht gemäß Linie A-A der Figur 9 in einer zur anderen Seite hin verschwenkten Nicht-Betriebsposition,
- Figur 11B: zeigt eine Schnittansicht gemäß Linie A-A der Figur 9 in einer zur anderen Seite hin verschwenkten Nicht-Betriebsposition, wobei zusätzlich ein Gehäuse des Vereinzelungsaggregats teilweise geschnitten ist,
- Figur 12: zeigt eine Perspektivansicht von Reiheneinheiten an einer Trägerkonstruktion eines mobilen landwirtschaftlichen Arbeitsgeräts in einer Betriebsposition und eines Traktors zum Ziehen des Arbeitsgeräts und somit zum Ziehen der Reiheneinheiten gemäß einer Ausführungsform der Erfindung,
- Figur 13: zeigt einen vergrößerten Teilbereich der Figur 12,
- Figur 14: zeigt eine schematische Darstellung des Grundprinzips gemäß einer Ausführungsform der Erfindung,
- Figur 15A: zeigt eine Ansicht von hinten eines Abgaberohrs gemäß einer Ausführungsform der Erfindung,
- Figur 15B: zeigt eine Seitenansicht des Abgaberohrs der Figur 15A,
- Figur 16A: zeigt eine Ansicht von hinten eines Abgaberohrs gemäß einer anderen Ausführungsform der Erfindung, und
- Figur 16B: zeigt eine Seitenansicht des Abgaberohrs der Figur 16A.

Die in den Figuren gezeigten Ausführungsformen stimmen teilweise überein, so dass für ähnliche oder im Wesentlichen gleiche Teile die gleichen Bezugszeichen verwendet sind, wobei zu deren Erläuterung auch auf die Beschreibung der anderen Ausführungsformen verwiesen wird, um Wiederholungen zu vermeiden. Bei Betrachtung der Figuren wird ersichtlich, dass in einigen Figuren zu Darstellungszwecken Teile ausgeblendet sind und teilweise nicht alle Teile mit Bezugszeichen versehen sind.

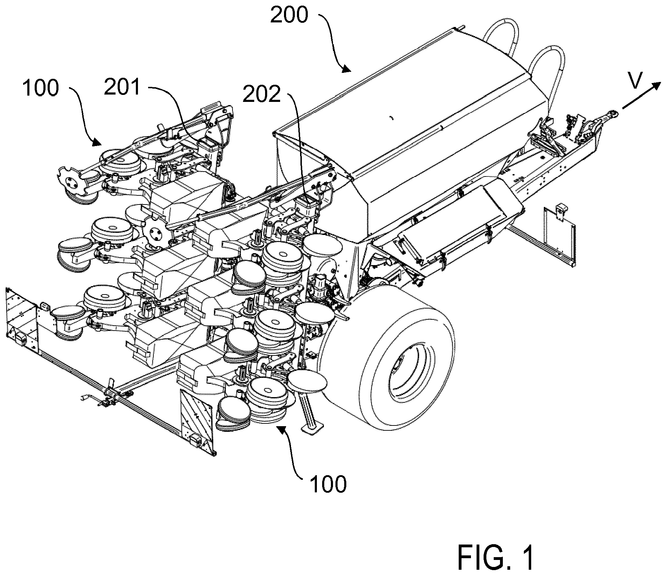

Figur 1 zeigt eine Perspektivansicht von Reiheneinheiten 100 zum Verteilen von Körner im Boden, insbesondere in einer Furche im Boden. Die Reiheneinheiten 100 sind an einer Trägerkonstruktion 201, 202 eines mobilen landwirtschaftlichen Arbeitsgeräts 200 montiert. Figur 1 zeigt die Trägerkonstruktion 201, 202 und somit die Reiheneinheiten 100 in einer Nicht-Betriebsposition, insbesondere in einer für eine Straßenfahrt vorgesehenen Nicht-Betriebs-Endposition, in der die Träger 201, 202 und somit die Reiheneinheiten 100 zur Breitenreduzierung zweckmäßig maximal eingeschwenkt sind.

Das Arbeitsgerät 200 dient zum Ziehen der Reiheneinheiten 100. Das Arbeitsgerät 200 kann an ein Zuggerät wie z. B. einen Traktor oder ein anderes Kraftfahrzeug angekoppelt werden, wobei Bezugszeichen V die Verfahrrichtung des Arbeitsgeräts 200 und somit die Verfahrrichtung V der Reiheneinheiten 100 darstellt.

Die Trägerkonstruktion 201, 202 umfasst einen ersten verschwenkbaren Träger 201 auf der einen Seite (z. B. auf der linken Seite) und einen zweiten verschwenkbaren Träger 202 auf der anderen Seite (z. B. auf der rechten Seite), wobei der erste Träger 201 eine Vielzahl von Reiheneinheiten 100 (in Figur 1 z. B. drei Reiheneinheiten 100) und der zweite Träger 202 eine Vielzahl von Reiheneinheiten 100 (in Figur 1 z. B. drei Reiheneinheiten 100) trägt. Die Reiheneinheiten 100 des ersten Trägers 201 sind vorzugsweise zumindest großteils baugleich zu den Reiheneinheiten 100 des zweiten Trägers 202 ausgebildet.

Der erste Träger 201 und der zweite Träger 202 sind zweckmäßig zur Breitenreduzierung der Tragkonstruktion 201, 202 mittels zumindest eines Schwenkvorgangs nach oben in die bereits erwähnte Nicht-Betriebsposition einschwenkbar, so dass der erste Träger 201 und der zweite Träger 202 im Wesentlichen vertikal ausgerichtet sind.

In der in Figur 1 gezeigten Nicht-Betriebsposition sind die einzelnen Reiheneinheiten 100 des ersten Trägers 201 im Wesentlichen horizontal liegend (z. B. in einem Toleranzbereich von +/- 15°) ausgerichtet und im Wesentlichen vertikal (z. B. in einem Toleranzbereich von +/- 15°) übereinander angeordnet. Ebenso sind die einzelnen Reiheneinheiten 100 des zweiten Trägers 202 im Wesentlichen horizontal liegend (z. B. in einem Toleranzbereich von +/- 15°) ausgerichtet und im Wesentlichen vertikal (z. B. in einem Toleranzbereich von +/- 15°) übereinander angeordnet.

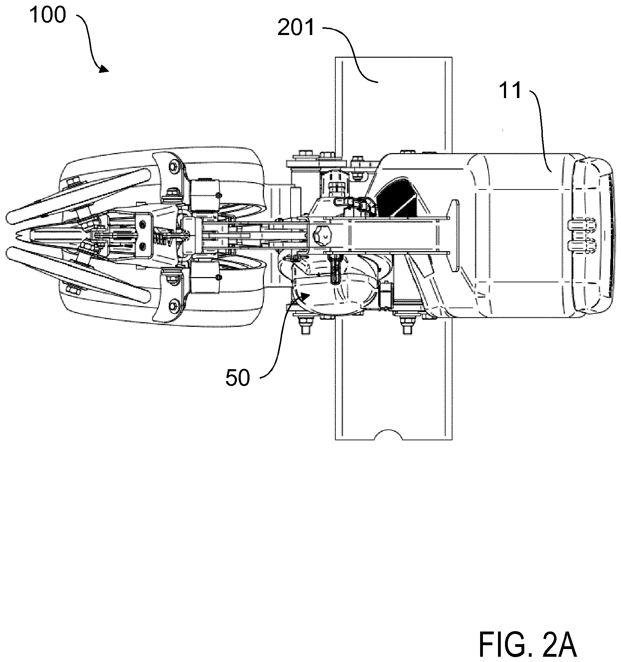

Figur 2A zeigt eine Ansicht von hinten einer Reiheneinheit 100 der Figur 1. Figur 2A zeigt somit die Reiheneinheit 100 in einer Nicht-Betriebsposition, wobei die Reiheneinheit an den Träger 201 montiert ist. Die Reiheneinheit 100 ist mit einem optionalen Vorratsbehälter 11 für Körner ausgestattet, der in der Betriebsposition oberhalb eines Vereinzelungsaggregats 50 montierbar ist und zur Versorgung des Vereinzelungsaggregats 50 mit Körnern dient. Alternativ oder ergänzend ist ein zentraler Vorratsbehälter zur Versorgung mehrerer Vereinzelungsaggregate 50 mit Körnern möglich.

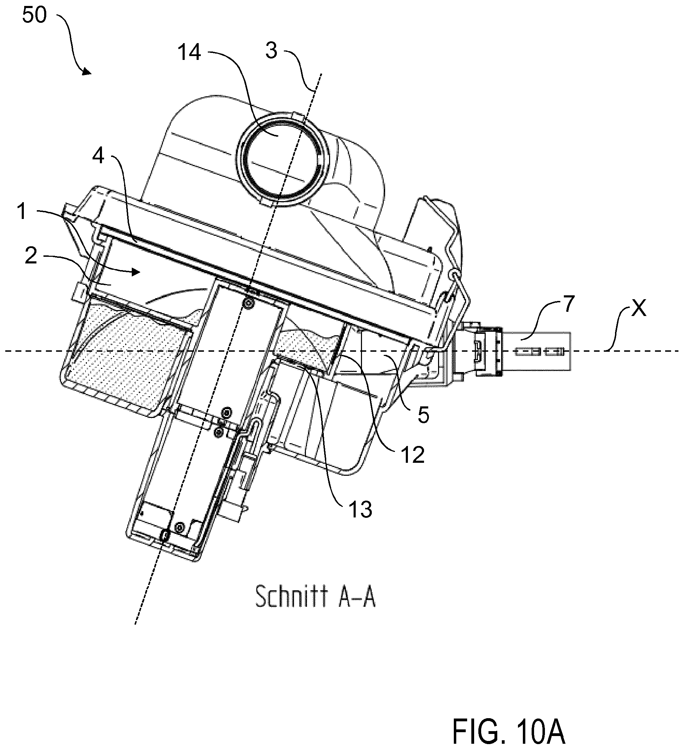

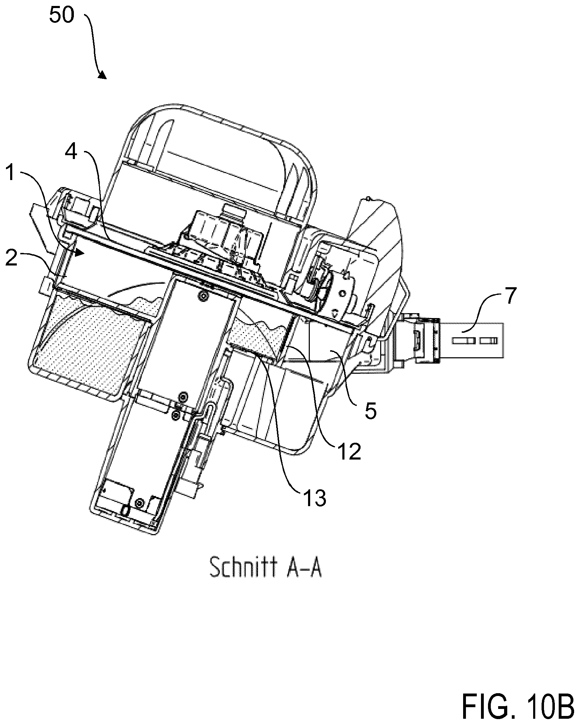

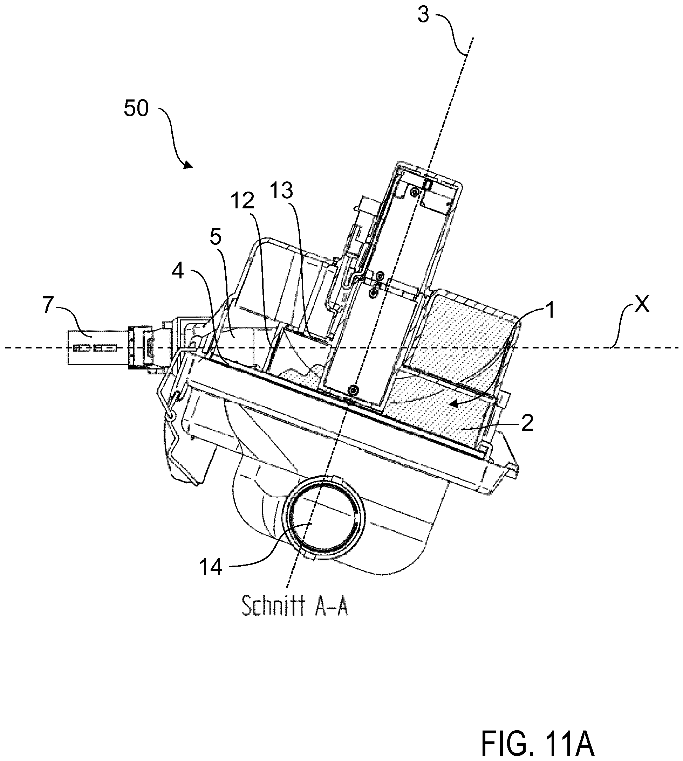

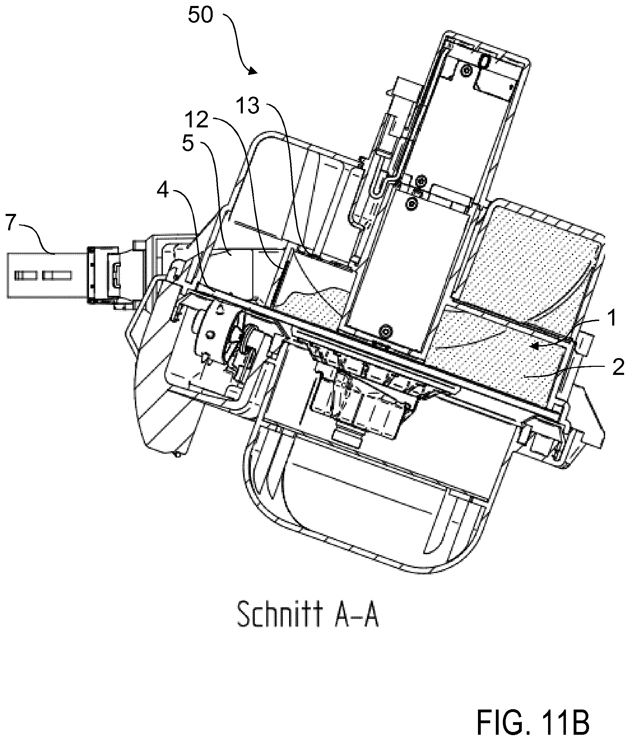

Das Vereinzelungsaggregat 50 umfasst, wie z. B. in den Figuren 10A, 10B, 11A und 11B gezeigt, eine Kammer 1 mit einem Aufnahmebereich 2 zur Aufnahme der Körner (Körner schematisch schraffiert dargestellt in den Figuren 10A, 10B, 11A und 11B) und eine einzige, z. B. im Wesentlichen insgesamt ebene oder im Wesentlichen tellerförmige, Vereinzelungsscheibe 4. Die Vereinzelungsscheibe 4 dient zum Vereinzeln der Körner und zweckmäßig zum Transportieren der Körner von dem Aufnahmebereich 2 hin zu einem Ausgabebereich 5 zum Ausgeben der Körner aus dem Vereinzelungsaggregat 50. Die Vereinzelungsscheibe 4 ist dabei um eine Drehachse 3 drehbar, wobei die Drehachse 3 im Wesentlichen rechtwinklig zur Vereinzelungsscheibe 4 ausgerichtet ist. Ein Abgaberohr 7 steht mit dem Ausgabebereich 5 in Verbindung, so dass die Körner aus dem Vereinzelungsaggregat 50 über den Ausgabebereich 5 und das Abgaberohr 7 in vereinzelter Form gleichmäßig im Boden verteilt werden können. Des Weiteren umfasst das Vereinzelungsaggregat 50 einen Druckluftanschluss 14 zur Einführung von negativer Druckluft in das Vereinzelungsaggregat 50, wobei die Erfindung auch Ausführungsformen umfasst, in denen positive Druckluft in das Vereinzelungsaggregat 50 einführbar ist. Das Vereinzelungsaggregat 50 kann somit als Überdrucksystem oder als Vakuumsystem ausgebildet sein.

Die Vereinzelungsscheibe 4 umfasst eine Vielzahl von Aussparungen für die Körner, wobei die Körner Druckluft-beaufschlagt (z. B. mittels positiver Druckluft oder negativer Druckluft) in den Aussparungen gehalten werden können, so dass die Vereinzelungsscheibe 4 die Körner Druckluft-unterstützt vereinzelt und Druckluft-unterstützt vom Aufnahmebereich 2 hin zum Ausgabebereich 5 transportieren kann, was insoweit bereits aus dem Stand der Technik bekannt ist. Die Druckluft kann vorzugsweise über den Ausgabebereich 5 entweichen, so dass die vereinzelten Körner Druckluft-beaufschlagt und somit gegenüber freiem Fall schneller vom Ausgabebereich 5 über das Abgaberohr 7 zum Boden transportiert werden können, was ebenfalls insoweit Stand der Technik ist.

Ferner umfasst das Vereinzelungsaggregat 50, wie z. B. ebenfalls in den Figuren 10A, 10B, 11A und 11B gezeigt, eine z. B. perforierte Kammerwand 13, wobei die Kammerwand 13 im Wesentlichen parallel zur Vereinzelungsscheibe 4 angeordnet ist und vorzugsweise die Kammer 1 einerseits durch die Vereinzelungsscheibe 4 begrenzt wird und andererseits durch die Kammerwand 13 begrenzt wird.

Darüber hinaus umfasst das Vereinzelungsaggregat 50 einen optionalen Steg 12, der weiter unten nähert erörtert wird.

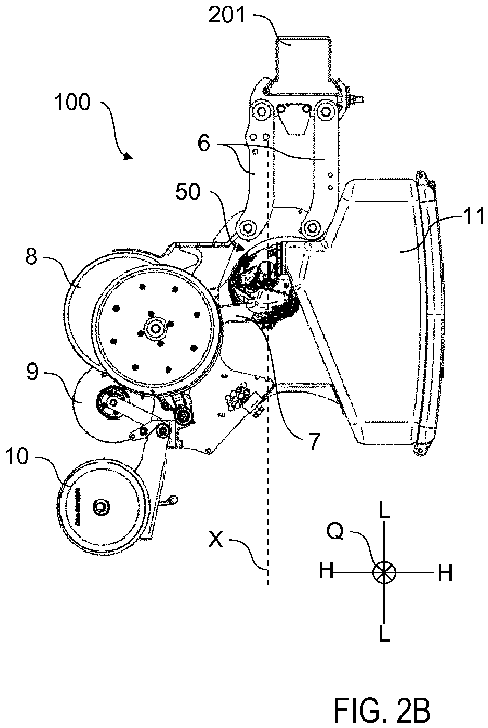

Figur 2B zeigt eine Draufsicht auf die Reiheneinheit 100 der Figur 2A. Figur 2A zeigt somit die Reiheneinheit 100 in einer Nicht-Betriebsposition.

Die Reiheneinheit 100 umfasst insbesondere:
- eine Montageeinrichtung 6, z. B. eine Schwenk- und/oder Parallelogramm-Montagekonstruktion, zur beweglichen Montage an den Träger 201,
- eine Furchen-erzeugende Einrichtung 8 zur Erzeugung einer Furche im Boden,
- eine Fang- oder Abbrems-Einrichtung 9 zum Fangen oder Abbremsen von aus dem Abgaberohr 7 ausgegebener vereinzelter Körner, und
- eine Einrichtung 10 zum Schließen der mit Körnern versehenen Furche und/oder zum Andrücken vereinzelter Körner in den Boden, insbesondere in eine Furche im Boden.

Figur 2B ist ferner die Längsrichtung L, die Höhenrichtung H und die Querrichtung Q der Reiheneinheit 100 in Nicht-Betriebsposition zu entnehmen.

Darüber hinaus zeigt Figur 2B eine Bezugsachse X, die weiter unten näher erläutert wird.

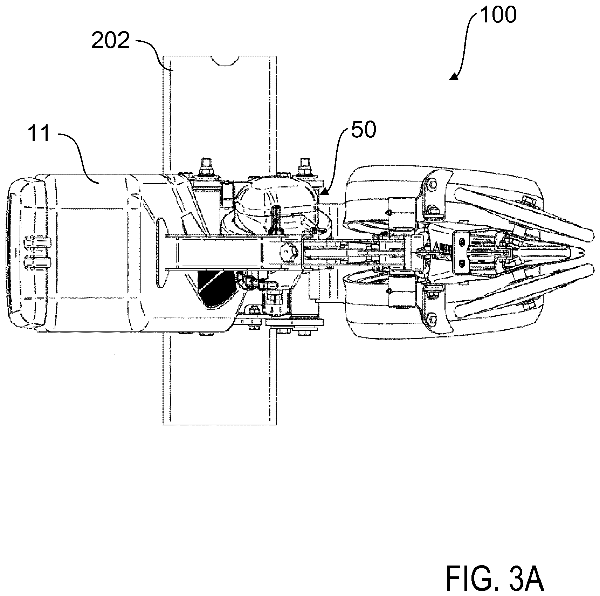

Figur 3A zeigt eine Ansicht von hinten einer Reiheneinheit 100 der Figur 1. Figur 3A zeigt somit die Reiheneinheit 100 in einer Nicht-Betriebsposition, wobei die Reiheneinheit an den Träger 202 montiert ist.

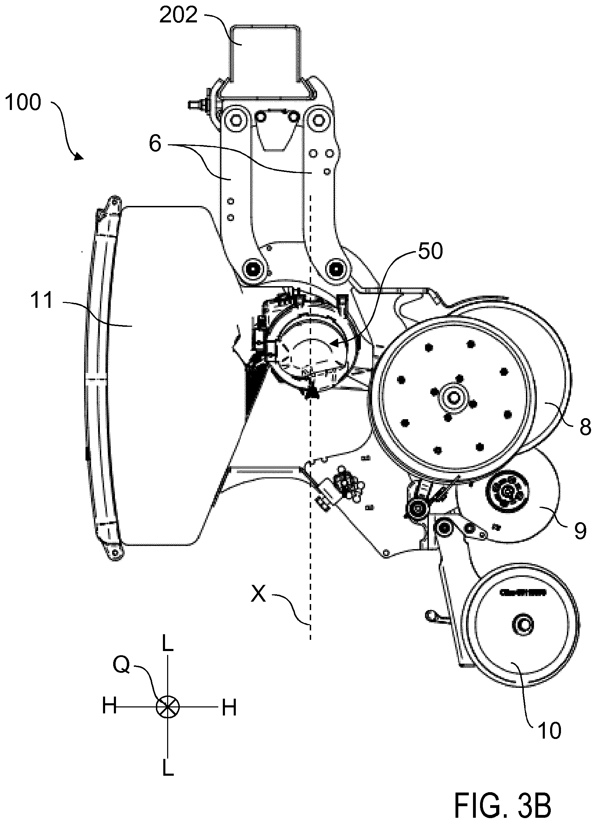

Figur 3B zeigt eine Draufsicht auf die Reiheneinheit 100 der Figur 3A. Figur 3B zeigt somit die Reiheneinheit 100 in einer Nicht-Betriebsposition.

Figur 3B ist ferner die Längsrichtung L, die Höhenrichtung H und die Querrichtung Q der Reiheneinheit 100 in Nicht-Betriebsposition zu entnehmen.

Darüber hinaus zeigt Figur 3B eine Bezugsachse X, die weiter unten näher erläutert wird.

Aus den Figuren 1, 2A, 2B, 3A und 3B ergibt sich, dass in der Nicht-Betriebsposition die einzelnen Reiheneinheiten 100 des ersten Trägers 201 und die einzelnen Reiheneinheiten 100 des zweiten Trägers 202 um im Wesentlichen 90° um parallel zu den Bezugsachsen X verlaufende Schwenkachsen verschwenkt sind.

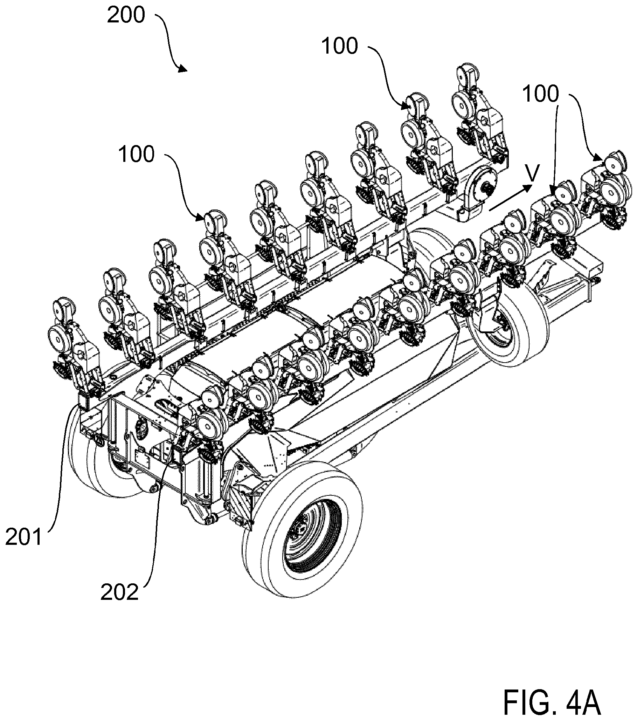

Figur 4A zeigt eine Perspektivansicht von Reiheneinheiten 100 in Nicht-Betriebsposition. Die Reiheneinheiten 100 sind an einer Trägerkonstruktion 201, 202 eines mobilen landwirtschaftlichen Arbeitsgeräts 200 gemäß einer anderen Ausführungsform der Erfindung montiert. Figur 4A zeigt die Trägerkonstruktion 201, 202 und somit die Reiheneinheiten 100 in einer Nicht-Betriebsposition, insbesondere in einer für eine Straßenfahrt vorgesehenen Nicht-Betriebs-Endposition, in der die Träger 201 und 202 zur Breitenreduzierung zweckmäßig maximal eingeschwenkt sind.

Die Trägerkonstruktion 201, 202 umfasst einen ersten verschwenkbaren Träger 201 auf der einen Seite (z. B. auf der linken Seite) und einen zweiten verschwenkbaren Träger 202 auf der anderen Seite (z. B. auf der rechten Seite), wobei der erste Träger 201 eine Vielzahl von Reiheneinheiten 100 und der zweite Träger 202 eine Vielzahl von Reiheneinheiten 100 trägt. Die Reiheneinheiten 100 des ersten Trägers 201 sind vorzugsweise zumindest großteils baugleich zu den Reiheneinheiten 100 des zweiten Trägers 202 ausgebildet.

Der erste Träger 201 und der zweite Träger 202 sind zweckmäßig zur Breitenreduzierung der Tragkonstruktion 201, 202 mittels zumindest eines Schwenkvorgangs in eine Nicht-Betriebsposition verschwenkbar, so dass der erste Träger 201 und der zweite Träger 202 im Wesentlichen horizontal und/oder im Wesentlichen parallel zur Verfahrrichtung V ausgerichtet sind.

In der in Figur 4A gezeigten Nicht-Betriebsposition sind die einzelnen Reiheneinheiten 100 des ersten Trägers 201 im Wesentlichen vertikal stehend (z. B. in einem Toleranzbereich von +/- 15°) ausgerichtet und im Wesentlichen horizontal (z. B. in einem Toleranzbereich von +/- 15°) hintereinander angeordnet. Ebenso sind die einzelnen Reiheneinheiten 100 des zweiten Trägers 202 im Wesentlichen vertikal stehend (z. B. in einem Toleranzbereich von +/- 15°) ausgerichtet und im Wesentlichen horizontal (z. B. in einem Toleranzbereich von +/- 15°) hintereinander angeordnet. Die einzelnen Reiheneinheiten 100 des ersten Trägers 201 und die einzelnen Reiheneinheiten 100 des zweiten Trägers 202 sind dabei um im Wesentlichen 90° um parallel zur Querrichtung Q der Reiheneinheiten 100 verlaufende Schwenkachsen verschwenkt.

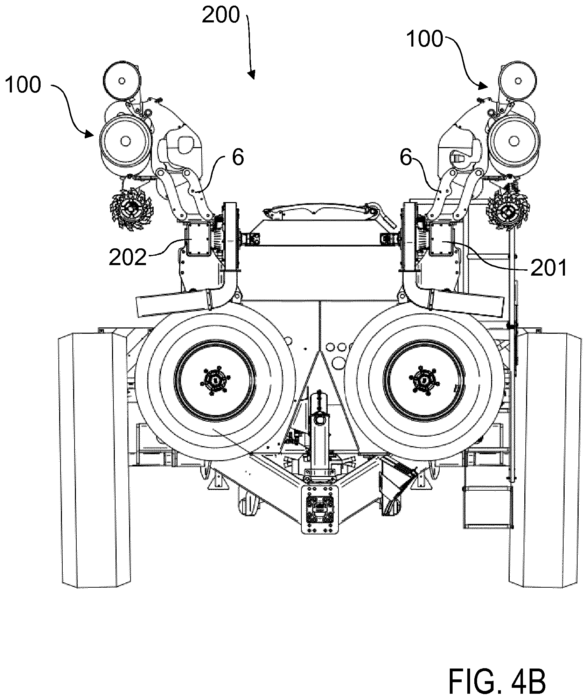

Figur 4B zeigt einer Vorderansicht der Reiheneinheiten 100, der Trägerkonstruktion 201, 202 und des Arbeitsgeräts 200 der Figur 4A, wobei die Reiheneinheiten 100 und die Trägerkonstruktion 201, 202 somit in Nicht-Betriebsposition dargestellt sind.

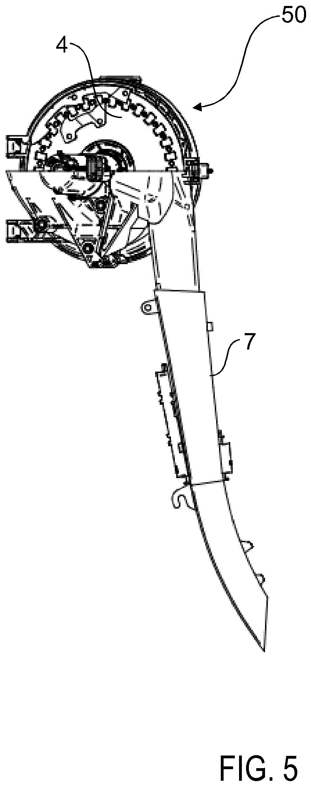

Figur 5 zeigt eine Seitenansicht eines Vereinzelungsaggregats 50 mit Abgaberohr 7 gemäß einer Ausführungsform der Erfindung, wobei zu Darstellungszwecken einige Teile ausgeblendet sind, so dass z. B. eine Vereinzelungsscheibe 4 des Vereinzelungsaggregat 50 mitsamt Aussparungen gesehen werden kann.

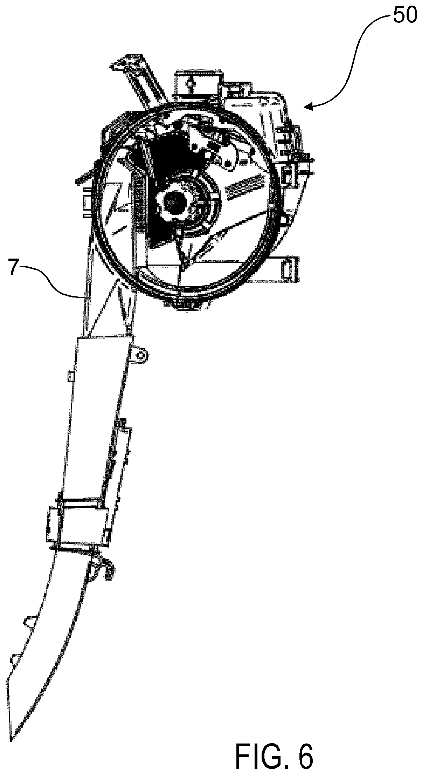

Figur 6 zeigt eine andere Seitenansicht des Vereinzelungsaggregats 50 mit Abgaberohr 7 der Figur 5.

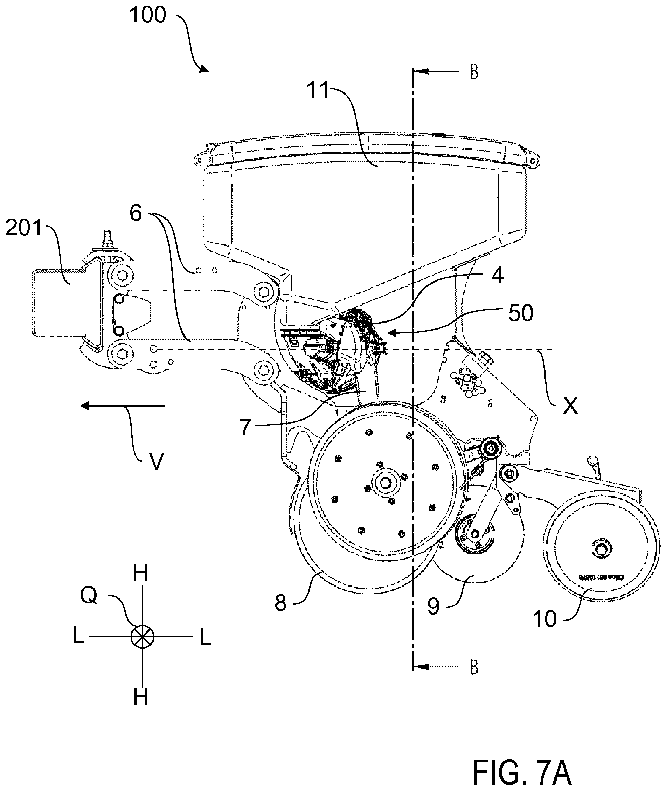

Figur 7A zeigt eine Seitenansicht einer Reiheinheit 100 gemäß einer Ausführungsform der Erfindung, wobei die Reiheneinheit 100 gemäß einer Betriebsposition zum Verteilen von Körnern im Boden ausgerichtet ist.

Die Reiheneinheit 100 umfasst insbesondere die Montagekonstruktion 6, das Abgaberohr 7, die Furchen-erzeugende Einrichtung 8, die Fang- oder Abbrems-Einrichtung 9, die Einrichtung 10 zum Schließen der mit Körnern versehenen Furche und/oder zum Andrücken vereinzelter Körner in den Boden, und das Vereinzelungsaggregat 50 mit Vereinzelungsscheibe 4. Die Vereinzelungsscheibe 4 ist in Betriebsposition der Reiheneinheit 100 im Wesentlichen vertikal stehend ausgerichtet.

Figur 7A ist ferner die Verfahrrichtung V der Reiheneinheit 100 in Betriebsposition sowie die Längsrichtung L, die Höhenrichtung H und die Querrichtung Q der Reiheneinheit 100 in Betriebsposition zu entnehmen.

Figur 7A zeigt, dass die Reiheneinheit 100 relativ zu einer Bezugsachse X ausgerichtet ist.

Die Bezugsachse X kann auf unterschiedliche Weise definiert werden. So kann sich die Bezugsachse X z. B. in Längsrichtung L der Reiheneinheit 100 durch die Reiheneinheit 100 erstrecken und alternativ oder ergänzend in Betriebsposition der Reiheneinheit 100 zweckmäßig zumindest im Wesentlichen parallel zur Verfahrrichtung V der Reiheneinheit 100 verlaufen. Auch kann die Bezugsachse X, zweckmäßig in Betriebsposition und/oder Nicht-Betriebsposition, einer Mittelachse der Reiheneinheit 100 entsprechen, sich in Betriebsposition der Reiheneinheit 100 horizontal erstrecken und/oder die Drehachse 3 und/oder den Drehmittelpunkt der Vereinzelungsscheibe 4 schneiden.

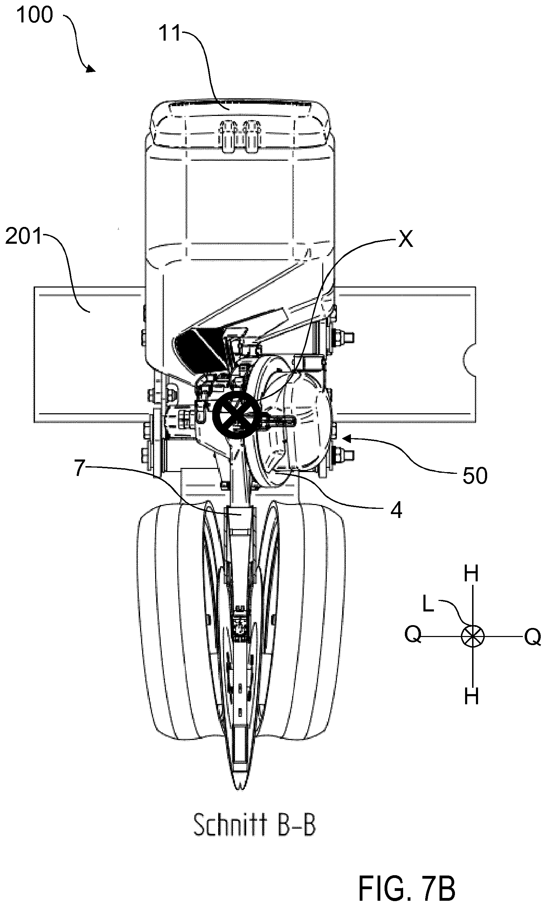

Figur 7B zeigt eine Ansicht von hinten der Reiheneinheit 100 der Figur 7A, wobei zu Darstellungszwecken einige Teile ausgeblendet sind. Figur 7B zeigt die Reiheneinheit 100 folglich ebenfalls in einer Betriebsposition ausgerichtet.

Bezugszeichen 4 zeigt hierbei auf die Vereinzelungsscheibe 4, wobei die Vereinzelungsscheibe 4 in Figur 7B nicht direkt zu sehen ist, weil sie innerhalb des Gehäuses des Vereinzelungsaggregats 50 angeordnet ist. Figur 7B zeigt nochmals schematisch die Bezugsachse X, die sich in Figur 7B rechtwinklig zur Zeichenebene erstreckt.

Den Figuren 7A und 7B ist zu entnehmen, dass die Vereinzelungsscheibe 4 relativ zu der Bezugsachse X schräg und somit nicht parallel zur Bezugsachse X ausgerichtet ist.

Den Figuren 7A und 7B ist ebenfalls zu entnehmen, dass die Drehachse 3 der Vereinzelungsscheibe 4 schräg, und somit vorzugsweise nicht rechtwinklig, zur Bezugsachse X verläuft, wobei in den Figuren 7A und 7B die Drehachse und somit das Bezugszeichen 3 zu Darstellungszwecken weggelassen sind.

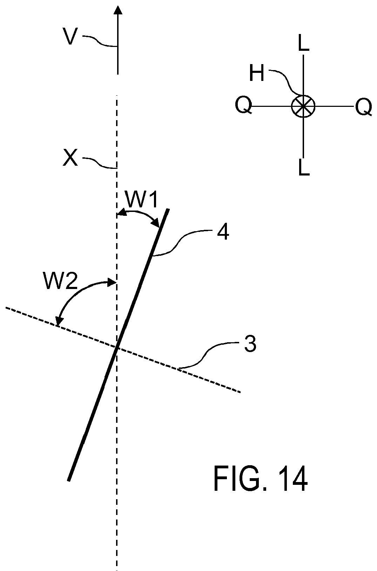

Die Vereinzelungsscheibe 4 ist relativ zu der Bezugsachse X mit einem Winkel W1 (siehe z. B. Figur 14) in einem Winkelbereich zwischen 5° und 60° schräg ausgerichtet ist. Der Winkel W1 beträgt vorzugsweise im Wesentlichen 20°.

Die Drehachse 3 ist relativ zur der Bezugsachse X mit einem Winkel W2 (siehe z. B. Figur 14) in einem Winkelbereich zwischen 85° und 30° schräg ausgerichtet ist. Der Winkel W2 beträgt vorzugsweise im Wesentlichen 70°.

Die Vereinzelungsscheibe 4 ist relativ zu der Bezugsachse X schräg ausgerichtet und derart im Vereinzelungsaggregat 50 angeordnet, dass trotz Verschwenkung der Reiheneinheit 100 in eine Nicht-Betriebsposition das Vereinzelungsaggregat 50 keine Position einnimmt, in der Körner aus der Kammer 1 ungewollt entweichen, und zwar unabhängig davon, ob die Reiheneinheit 100 zu einer ersten Seite in eine Nicht-Betriebsposition verschwenkt wird oder zur einer zweiten Seite in eine Nicht-Betriebsposition verschwenkt wird.

Zu erwähnen ist hierbei, dass der Winkel, um welches das Vereinzelungsaggregat 50 gedreht wird, sich insbesondere ergibt aus der Lage der Einlassöffnung in die Kammer 1, der Abmessung der Kammer 1, dem Winkel der Vereinzelungsscheibe 4, dem Abstand zum Ausgabebereich 5 sowie dem Klapp-/Verschwenkwinkel der Trägerkonstruktion 201. 202. Große Vereinzelungsaggregate 50 führen somit zweckmäßig zu kleinen Winkeln. Kleine Vereinzelungsaggregate 50 führen somit zweckmäßig zu großen Winkeln.

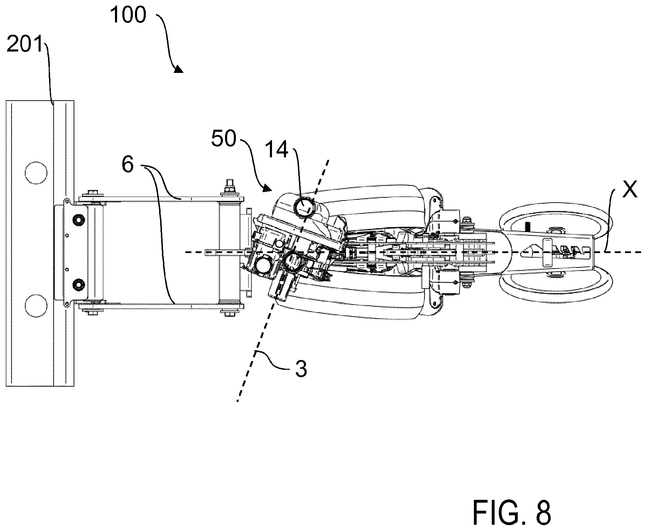

Figur 8 zeigt eine Draufsicht auf die Reiheneinheit 100 der Figur 7A, wobei zu Darstellungszwecken der Vorratsbehälter 11 ausgeblendet ist. Figur 8 zeigt die Reiheneinheit 100 allerdings in einer Nicht-Betriebsposition.

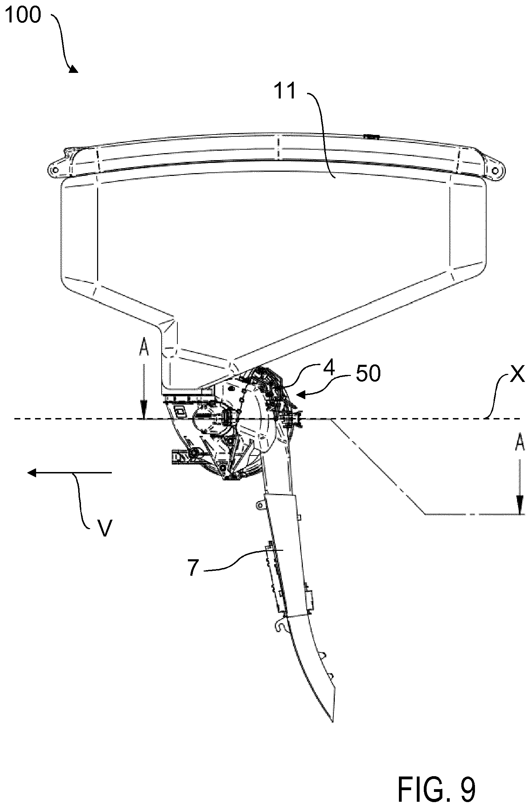

Figur 9 zeigt eine Seitenansicht des Vereinzelungsaggregats 50, der Vereinzelungsscheibe 4, des Abgaberohrs 7 und des Vorratsbehälters 11 in Betriebsposition der Reiheneinheit 100.

Figur 10A zeigt eine Schnittansicht einer Reiheneinheit 100 gemäß Linie A-A der Figur 9, wobei die Reiheneinheit 100 zu der einen Seite hin (z. B. nach rechts) in eine Nicht-Betriebsposition verschwenkt ist.

Figur 10B zeigt eine Schnittansicht der Reiheneinheit 100 gemäß Linie A-A der Figur 9, wobei die Reiheneinheit 100 zu der einen Seite hin (z. B. nach rechts) in eine Nicht-Betriebsposition verschwenkt ist und zusätzlich zu Figur 10A das Gehäuse des Vereinzelungsaggregats 50 geschnitten ist.

Figur 11A zeigt eine Schnittansicht einer Reiheneinheit 100 gemäß Linie A-A der Figur 9, wobei die Reiheneinheit 100 zu der anderen Seite hin (z. B. nach links) in eine Nicht-Betriebsposition verschwenkt ist.

Figur 11B zeigt eine Schnittansicht der Reiheneinheit 10 gemäß Linie A-A der Figur 9, wobei die Reiheneinheit 10 zu der anderen Seite hin (z. B. nach links) in eine Nicht-Betriebsposition verschwenkt ist und zusätzlich zu Figur 11A das Gehäuse des Vereinzelungsaggregats 50 geschnitten ist.

Der in den Figuren 10A, 10B, 11A und 11B zu sehende Steg 12 ist in Drehrichtung der Vereinzelungsscheibe 4 vor dem Ausgabebereich 5 angeordnet, ist zweckmäßig von der Vereinzelungsscheibe 4 beabstandet, um einen Durchlass für Körner zu ermöglichen, und erstreckt sich vorzugsweise in der Kammer 1, z. B. zwischen der Vereinzelungsscheibe 4 und der Kammerwand 13. In Betriebsposition der Reiheneinheit 100 kann der Steg 12 optional dazu dienen, eine Druckdifferenz in der Kammer 1 zu reduzieren, um ein Lösen der Körner von den Aussparungen in der Vereinzelungsscheibe 4 zu ermöglichen.

Bei der in den Figuren 10A und 10B gezeigten Nicht-Betriebsposition der Reiheneinheit 100 dient die Kammerwand 13 als hin zum Ausgabebereich 5 abfallende Rampe für die Körner (schraffiert dargestellt). Der Steg 12 kann hierbei als zusätzlicher Blockaderiegel für die Körner dienen, um ein ungewolltes Entweichen von Körnern aus der Kammer 1 zu verhindern.

Bei der in den Figuren 11A und 11B gezeigten Nicht-Betriebsposition der Reiheneinheit 100 dient die Vereinzelungsscheibe 4 als hin zum Ausgabebereich 5 aufsteigende Rampe für die Körner (schraffiert dargestellt), um ein ungewolltes Entweichen von Körnern aus der Kammer 1, insbesondere dem Ausgabebereich 5 zu verhindern. Der Steg 12 kann hierbei vorzugsweise ebenfalls als Blockaderiegel für die Körner wirken, um ein ungewolltes Entweichen von Körnern aus der Kammer 1, insbesondere dem Ausgabebereich 5, zu verhindern. Der Steg 12 kann hierbei als zusätzlicher Blockaderiegel für die Körner dienen, um ein ungewolltes Entweichen von Körnern insbesondere aus dem Ausgabebereich 5 zu verhindern.

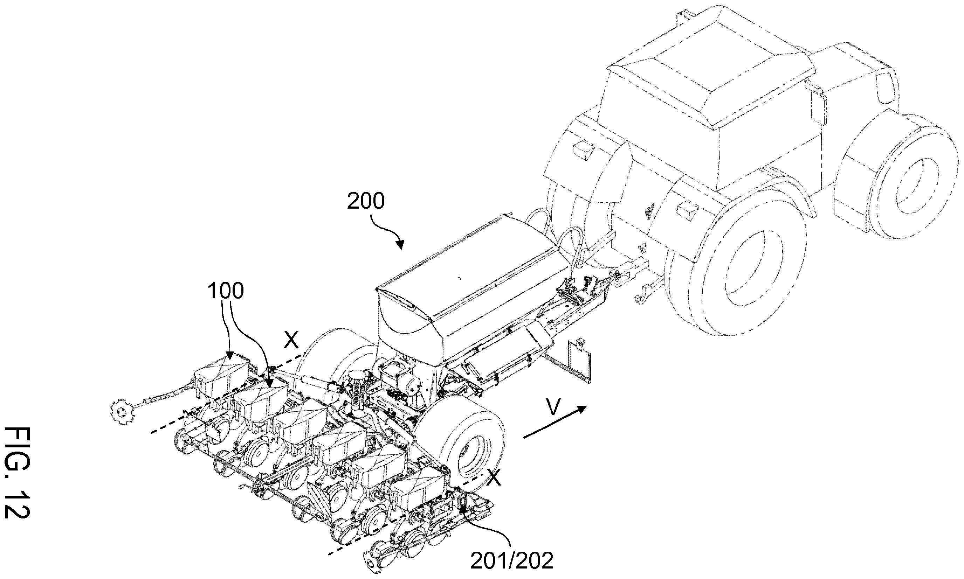

Figur 12 zeigt eine Perspektivansicht von Reiheneinheiten 100 an einer Trägerkonstruktion 201, 202 eines mobilen landwirtschaftlichen Arbeitsgeräts 200 in Betriebsposition und eines Traktors zum Ziehen des Arbeitsgeräts 200 und somit zum Ziehen der Reiheneinheiten 100 in Verfahrrichtung V.

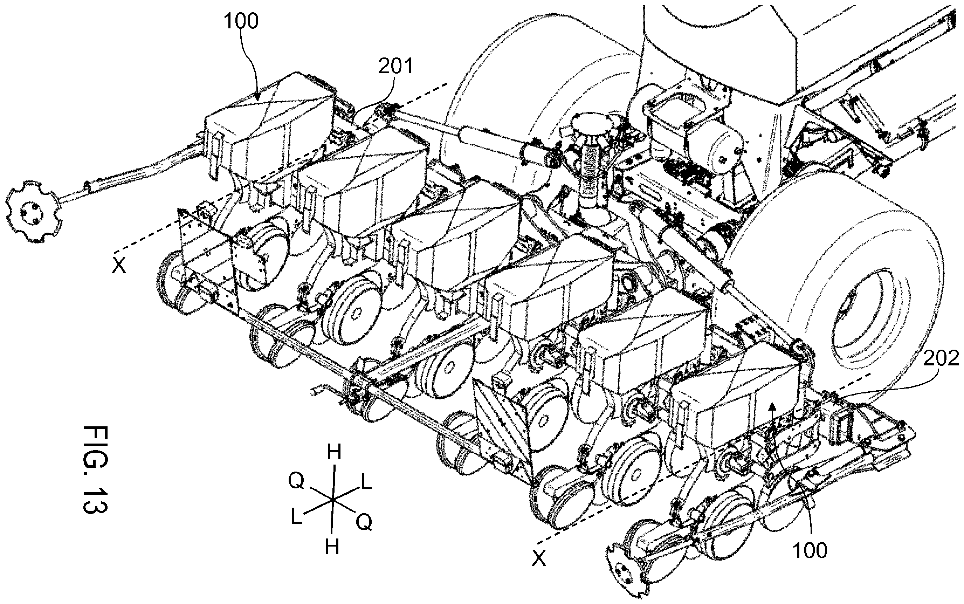

Figur 13 zeigt einen vergrößerten Teilbereich der Figur 12, wobei insbesondere die Reiheneinheiten 100 in deren Betriebsposition zum Verteilen von Körner im Boden vergrößert zu sehen sind.

Figur 14 zeigt eine schematische Darstellung des Grundprinzips gemäß einer Ausführungsform der Erfindung.

Demnach ist eine Vereinzelungsscheibe 4 relativ zu einer Bezugsachse X schräg ausgerichtet, wobei alternativ oder ergänzend eine Drehachse 3 der Vereinzelungsscheibe 4 nicht rechtwinklig zur Bezugsachse X ausgerichtet ist.

Die Bezugsachse X kann wie schon zuvor erwähnt auf zumindest eine der folgenden Arten definiert werden: So kann sich die Bezugsachse X z. B. in Längsrichtung L der Reiheneinheit 100 durch die Reiheneinheit 100 erstrecken und alternativ oder ergänzend in Betriebsposition der Reiheneinheit 100 zweckmäßig zumindest im Wesentlichen parallel zur Verfahrrichtung V der Reiheneinheit 100 verlaufen. Auch kann die Bezugsachse X, zweckmäßig in Betriebsposition und/oder Nicht-Betriebsposition, einer Mittelachse der Reiheneinheit 100 entsprechen, sich in Betriebsposition der Reiheneinheit 100 horizontal erstrecken und/oder die Drehachse 3 und/oder den Drehmittelpunkt der Vereinzelungsscheibe 4 schneiden.

Die Vereinzelungsscheibe 4 ist relativ zu der Bezugsachse X mit einem Winkel W1 von vorzugsweise im Wesentlichen 20° schräg ausgerichtet.

Die Drehachse 3 ist relativ zur der Bezugsachse X mit einem Winkel W2 von vorzugsweise im Wesentlichen 70° schräg ausgerichtet.

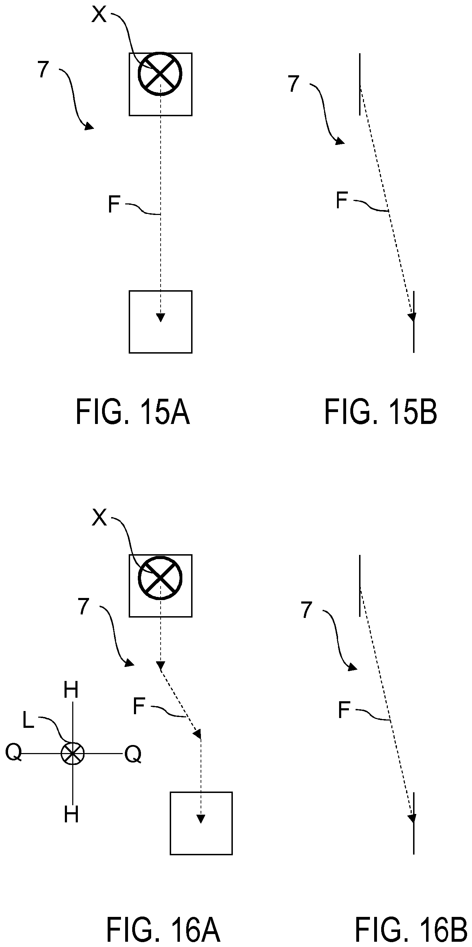

Figur 15A zeigt eine stark schematische Darstellung eines Abgaberohrs 7, oben mit Einlass und unten mit Auslass, gemäß einer Ausführungsform der Erfindung von hinten, wobei Figur 15B eine zugehörige stark schematische Seitenansicht zeigt. Das Abgaberohr 7 definiert eine Mittelachse F, die in den Figuren 15A und 15B schematisch linear dargestellt ist, in der Praxis aber vorzugsweise gekrümmt oder bogenförmig verläuft.

Bei der in den Figuren 15A und 15B gezeigten Ausführungsform sind der Einlass und der Auslass des Abgaberohrs 7 in Querrichtung Q der Reiheneinheit im Wesentlichen mittig zueinander ausgerichtet, so dass sich eine Mittelachse F des Abgaberohrs 7 in nur 2-Dimensionen vom Einlass zum Auslass erstreckt.

Figur 16A zeigt eine stark schematische Darstellung eines Abgaberohrs 7, oben mit Einlass und unten mit Auslass, gemäß einer anderen Ausführungsform der Erfindung von hinten, wobei Figur 16B eine zugehörige stark schematische Seitenansicht zeigt.

Das Abgaberohr 7 definiert eine Mittelachse F, die in den Figuren 16A und 16B schematisch linear dargestellt ist, in der Praxis aber vorzugsweise zumindest abschnittsweise gekrümmt oder bogenförmig verläuft.

Bei der in den Figuren 16A und 16B gezeigten Ausführungsform sind der Einlass und der Auslass des Abgaberohrs 7 in Querrichtung Q der Reiheneinheit 100 seitlich versetzt zueinander ausgerichtet, so dass sich vorzugsweise die Mittelachse F des Abgaberohrs 7 zumindest abschnittsweise in drei Dimensionen vom Einlass zum Auslass erstreckt.

Die Mittelachse F des Abgaberohrs 7 erstreckt sich folglich nicht ausschließlich in nur einer einzigen Ebene, sondern umfasst zumindest zwei seitliche Richtungswechsel relativ zur Bezugsachse X, wie z. B. in Figur 16A gezeigt.

In Richtung der Bezugsachse X können der Einlass und der Auslass z. B. hintereinander oder im Wesentlichen exakt übereinander angeordnet sein.

### Bezugszeichenliste

- 1: Kammer
- 2: Aufnahmebereich
- 3: Drehachse
- 4: Vereinzelungsscheibe, insbesondere Dosierscheibe
- 5: Ausgabebereich
- 6: Montageeinrichtung
- 7: Abgaberohr
- 8: Furchen-erzeugende Einrichtung
- 9: Fang- oder Abbremseinrichtung
- 10: Einrichtung zum Schließen der mit Körnern versehenen Furche und/oder zum Andrücken vereinzelter Körner in den Boden
- 11: Vorratsbehälter
- 12: Steg
- 13: Kammerwand
- 14: Druckluftanschluss
- 50: Vereinzelungsaggregat, z. B. Dosieraggregat
- 100: Reiheneinheit
- 200: Arbeitsgerät
- 201: Träger auf einer ersten Seite einer Trägerkonstruktion
- 202: Träger auf einer zweiten Seite einer Trägerkonstruktion

- X: Bezugsachse
- L: Längsrichtung der Reiheneinheit
- H: Höhenrichtung der Reiheneinheit
- Q: Querrichtung der Reiheneinheit
- W1: Winkel der Vereinzelungsscheibe
- W2: Winkel der Drehachse
- F: Mittelachse des Abgaberohrs
- V: Verfahrrichtung

## Patentansprüche

1. Reiheneinheit (100), vorzugsweise Reiheneinheit (100) zur Montage an eine Trägerkonstruktion (201, 202) eines mobilen landwirtschaftlichen Arbeitsgeräts (200), insbesondere zum Ziehen der Reiheneinheit (100), wobei die Reiheneinheit (100) in Betriebsposition zum Verteilen von Körnern dient und in eine Nicht-Betriebsposition verschwenkbar ist, mit: zumindest einem Vereinzelungsaggregat (50), wobei das Vereinzelungsaggregat (50) eine Kammer (1) mit einem Aufnahmebereich (2) zur Aufnahme der Körner und eine um eine Drehachse (3) drehbare Vereinzelungsscheibe (4) aufweist, wobei die Vereinzelungsscheibe (4) zum Vereinzeln der Körner dient und vorzugsweise zum Transportieren der Körner von dem Aufnahmebereich (2) zu einem Ausgabebereich (5) zum Ausgeben der Körner aus dem Vereinzelungsaggregat (50), wobei die Vereinzelungsscheibe (4) relativ zu einer Bezugsachse (X) schräg ausgerichtet ist und die Bezugsachse (X) sich in Längsrichtung (L) der Reiheneinheit (100) durch die Reiheneinheit (100) erstreckt und in Betriebsposition der Reiheneinheit (100) parallel zur Verfahrrichtung (V) der Reiheneinheit (100) verläuft, und wobei das Vereinzelungsaggregat (50) nur eine einzige Vereinzelungsscheibe (4) aufweist.

2. Reiheneinheit (100) nach Anspruch 1, **dadurch gekennzeichnet, dass** die Bezugsachse (X)
- einer Mittelachse der Reiheneinheit (100) entspricht,
- sich in Betriebsposition der Reiheneinheit (100) horizontal erstreckt,
- die Drehachse (3) schneidet, und/oder
- einen Drehmittelpunkt der Vereinzelungsscheibe (4) schneidet.

3. Reiheneinheit (100) nach einem der vorhergehenden Ansprüche, **dadurch gekennzeichnet, dass** die Vereinzelungsscheibe (4) in Betriebsposition im Wesentlichen vertikal stehend ausgerichtet ist, die Vereinzelungsscheibe (4) nicht parallel zur Bezugsachse (X) ausgerichtet ist und/oder die Drehachse (3) schräg und somit nicht rechtwinklig zur Bezugsachse (X) verläuft.

4. Reiheneinheit (100) nach einem der vorhergehenden Ansprüche, **dadurch gekennzeichnet, dass** trotz Verschwenken der Reiheneinheit (100) in eine Nicht-Betriebsposition das Vereinzelungsaggregat (50) keine Position einnimmt, in der Körner aus der Kammer (1) ungewollt entweichen, und zwar unabhängig davon, ob die Reiheneinheit (100) zu einer ersten Seite in eine Nicht-Betriebsposition verschwenkt wird oder zur eine zweiten Seite in eine Nicht-Betriebsposition verschwenkt wird.

5. Reiheneinheit (100) nach einem der vorhergehenden Ansprüche, **dadurch gekennzeichnet, dass** die Reiheneinheit (100), vorzugsweise zu einer ersten Seite, in eine Nicht-Betriebsposition verschwenkbar ist, in der die Vereinzelungsscheibe (4) als hin zum Ausgabebereich (5) aufsteigende Rampe für die Körner dient, um ein ungewolltes Entweichen von Körnern aus der Kammer (1) zu verhindern.

6. Reiheneinheit (100) nach einem der vorhergehenden Ansprüche, **dadurch gekennzeichnet, dass** die Reiheneinheit (100), vorzugsweise zu einer zweiten Seite, in eine Nicht-Betriebsposition verschwenkbar ist, in der die Kammerwand (13) als hin zum Ausgabebereich (5) abfallende Rampe für die Körner dient.

7. Reiheneinheit (100) nach einem der vorhergehenden Ansprüche, **dadurch gekennzeichnet, dass** das Vereinzelungsaggregat (50) einen Steg (12) aufweist, um in einer Nicht-Betriebsposition ein ungewolltes Entweichen von Körnern aus der Kammer (1) zu verhindern und/oder um eine Druckdifferenz in der Kammer (1) zu reduzieren.

8. Reiheneinheit (100) nach Anspruch 7, **dadurch gekennzeichnet, dass** der Steg (12) zumindest eines der folgenden Merkmale aufweist:
- der Steg (12) ist in Drehrichtung der Vereinzelungsscheibe (4) vor dem Ausgabebereich (5) angeordnet,
- der Steg (12) erstreckt sich in der Kammer (1),
- der Steg (12) ist von der Vereinzelungsscheibe (4) zumindest abschnittweise beabstandet, um einen Durchlass für Körner zu ermöglichen, und/oder
- der Steg (12) dient in einer Nicht-Betriebsposition als Blockaderiegel für die Körner.

9. Reiheneinheit (100) nach einem der vorhergehenden Ansprüche, **dadurch gekennzeichnet, dass** die Reiheneinheit (100) in eine Nicht-Betriebsposition verschwenkbar ist, in der sie
- im Wesentlichen horizontal liegend ausgerichtet ist, so dass vorzugsweise die Bezugsachse (X) ebenfalls im Wesentlichen horizontal verläuft, und/oder
- im Wesentlichen vertikal stehend ausgerichtet ist, so dass vorzugsweise die Bezugsachse (X) ebenfalls im Wesentlichen vertikal verläuft.

10. Reiheneinheit (100) nach einem der vorhergehenden Ansprüche, **dadurch gekennzeichnet, dass** die Reiheneinheit (100) zumindest eines von Folgenden umfasst:
- eine Montageeinrichtung (6), vorzugsweise eine Schwenk- und/oder Parallelogramm-Montagekonstruktion, zur beweglichen Montage an eine Trägerkonstruktion (201,202) eines mobilen landwirtschaftlichen Arbeitsgeräts (200),
- ein Abgaberohr (7) zur Verbindung mit dem Ausgabebereich (5) und zum Abgeben vereinzelter Körner auf den Boden, vorzugsweise in eine Furche im Boden,
- eine Furchen-erzeugende Einrichtung (8) zur Erzeugung einer Furche im Boden,
- eine Fang- oder Abbrems-Einrichtung (9) zum Fangen oder Abbremsen von aus dem Abgaberohr (7) ausgegebener vereinzelter Körner,
- eine Einrichtung (10) zum Schließen der mit Körnern versehenen Furche und/oder zum Andrücken vereinzelter Körner in den Boden, insbesondere in einer Furche im Boden, und/oder
- einen Vorratsbehälter (11) für Körner, der oberhalb des Vereinzelungsaggregats (50) montierbar ist und zur Versorgung des Aufnahmebereichs (2) mit Körnern dient.

11. Reiheneinheit (100) nach Anspruch 10, **dadurch gekennzeichnet, dass** ein Einlass des Abgaberohrs (7) und ein Auslass des Abgaberohrs (7) in Querrichtung (Q) der Reiheneinheit (100) versetzt zueinander angeordnet sind und/oder eine Mittelachse (F) des Abgaberohrs (7) sich in drei Dimensionen vom Einlass zum Auslass des Abgaberohrs (7) erstreckt.

12. Trägerkonstruktion (201, 202), vorzugsweise Trägerkonstruktion (201, 202) eines mobilen landwirtschaftlichen Arbeitsgeräts (200), mit einem ersten Träger (201) auf der einen Seite und einem zweiten Träger (202) auf der anderen Seite, wobei der erste Träger (201) eine Vielzahl von Reiheneinheiten (100) und der zweite Träger (202) eine Vielzahl von Reiheneinheiten (100) nach einem der vorhergehenden Ansprüche aufweist.

13. Trägerkonstruktion (201,202) nach Anspruch 12, **dadurch gekennzeichnet, dass** die Vereinzelungsaggregate (50) der Reiheneinheiten (100) des ersten Trägers (201) und die Vereinzelungsaggregate (50) der Reiheinheiten des zweiten Trägers (202) zumindest in Bezug auf die Vereinzelungsscheiben (4), die Kammern (1), die Stege (12) und/oder die Kammerwände (13) baugleich ausgeführt sind.

14. Trägerkonstruktion (201, 202) nach Anspruch 12 oder 13, **dadurch gekennzeichnet, dass** der erste Träger (201) und der zweite Träger (202) zur Breitenreduzierung der Trägerkonstruktion (201, 202) mittels zumindest eines Schwenkvorgangs verschwenkbar sind, so dass dadurch die einzelnen Reiheneinheiten (100) des ersten Trägers (201) und die einzelnen Reiheneinheiten (100) des zweiten Trägers (202) in eine Nicht-Betriebsposition gelangen, wobei trotz des Verschwenkvorgangs die Vereinzelungsaggregate (50) des ersten Trägers (201) und die Vereinzelungsaggregate (50) des zweiten Trägers (202) keine Position einnehmen, in der Körner aus den einzelnen Kammern (1) ungewollt entweichen.

15. Trägerkonstruktion (201, 202) nach einem der Ansprüche 12 bis 14, **dadurch gekennzeichnet, dass**
- die Vereinzelungsscheiben (4) der einzelnen Reiheneinheiten (100) des ersten Trägers (201) in einer Nicht-Betriebsposition als hin zu den einzelnen Ausgabebereichen (5) aufsteigende Rampen für die Körner dienen, um in einer Nicht-Betriebsposition ein ungewolltes Entweichen von Körnern aus den Kammern (1) zu verhindern, und
- die Kammerwände (13) der einzelnen Reiheneinheiten (100) des zweiten Trägers (202) in einer Nicht-Betriebsposition als hin zu den einzelnen Ausgabebereichen (5) absteigende Rampen für die Körner dienen.

16. Trägerkonstruktion (201, 202) nach einem der Ansprüche 12 bis 15, **dadurch gekennzeichnet, dass** in der Nicht-Betriebsposition zumindest eines der folgenden Merkmale erfüllt ist:
- die einzelnen Reiheneinheiten (100) des ersten Trägers (201) sind übereinander anordbar und die einzelnen Reiheneinheiten (100) des zweiten Trägers (202) sind übereinander anordbar,
- die einzelnen Reiheneinheiten (100) des ersten Trägers (201) und die einzelnen Reiheneinheiten (100) des zweiten Trägers (202) sind im Wesentlichen horizontal liegend ausrichtbar,
- die einzelnen Reiheneinheiten (100) des ersten Trägers (201) und die einzelnen Reiheneinheiten (100) des zweiten Trägers (202) sind um in einem Toleranzbereich von +/- 10° parallel zu den Bezugsachsen (X) verlaufende Schwenkachsen verschwenkt, vorzugsweise um mehr als 80°, insbesondere um im Wesentlichen 90°.

17. Trägerkonstruktion (201, 202) nach einem der Ansprüche 12 bis 16, **dadurch gekennzeichnet, dass** in der Nicht-Betriebsposition zumindest eines der folgenden Merkmale erfüllt ist:
- die einzelnen Reiheneinheiten (100) des ersten Trägers (201) sind hintereinander anordbar und die einzelnen Reiheneinheiten (100) des zweiten Trägers (202) sind hintereinander anordbar,
- die einzelnen Reiheneinheiten (100) des ersten Trägers (201) und die einzelnen Reiheneinheiten (100) des zweiten Trägers (202) sind im Wesentlichen vertikal stehend ausrichtbar,
- die einzelnen Reiheneinheiten (100) des ersten Trägers (201) und die einzelnen Reiheneinheiten (100) des zweiten Trägers (202) sind um in einem Toleranzbereich von +/- 10° parallel zur Querrichtung (Q) der Reiheneinheiten (100) verlaufende Schwenkachsen verschwenkt, vorzugsweise um mehr als 80°, insbesondere um im Wesentlichen 90°.

## Claims

1. A row unit (100), preferably row unit (100) for mounting on a carrier construction (201, 202) of a mobile agricultural working implement (200), in particular for pulling the row unit (100), wherein the row unit (100) in the operating position serves for distributing grains and is pivotable into a non-operating position, with:
at least one singulating assembly (50), wherein the singulating assembly (50) has a chamber (1) with a receiving region (2) for receiving the grains, and a singulating disc (4) which is rotatable about an axis of rotation (3), wherein the singulating disc (4) serves for singulating the grains and preferably for transporting the grains from the receiving region (2) to a discharge region (5) for discharging the grains from the singulating assembly (50), wherein the singulating disc (4) is oriented obliquely relative to a reference axis (X), and the reference axis (X) extends through the row unit (100) in the longitudinal direction (L) of the row unit (100) and, in the operating position of the row unit (100), runs parallel to the movement direction (V) of the row unit (100), and wherein the singulating assembly (50) has only a single singulating disc (4).

2. The row unit (100) according to Claim 1, **characterized in that** the reference axis (X)
- corresponds to a centre axis of the row unit (100),
- extends horizontally in the operating position of the row unit (100),
- intersects the axis of rotation (3), and/or
- intersects a centre point of rotation of the singulating disc (4).

3. The row unit (100) according to either of the preceding claims, **characterized in that** the singulating disc (4) in the operating position is oriented standing substantially vertically, the singulating disc (4) is not oriented parallel to the reference axis (X), and/or the axis of rotation (3) runs obliquely and therefore not at a right angle to the reference axis (X).

4. The row unit (100) according to one of the preceding claims, **characterized in that**, despite pivoting the row unit (100) into a non-operating position, the singulating assembly (50) does not take up a position in which grains inadvertently escape from the chamber (1), specifically independently of whether the row unit (100) is pivoted on a first side into a non-operating position or is pivoted on a second side into a non-operating position.

5. The row unit (100) according to one of the preceding claims, **characterized in that** the row unit (100) is pivotable, preferably on a first side, into a non-operating position in which the singulating disc (4) serves as a ramp, which rises towards the discharge region (5), for the grains, in order to prevent an inadvertent escape of grains from the chamber (1).

6. The row unit (100) according to one of the preceding claims, **characterized in that** the row unit (100) is pivotable, preferably on a second side, into a non-operating position in which the chamber wall (13) serves as a ramp, dropping towards the discharge region (5), for the grains.

7. The row unit (100) according to one of the preceding claims, **characterized in that** the singulating assembly (50) has a web (12) in order, in a non-operating position, to prevent an inadvertent escape of grains from the chamber (1) and/or in order to reduce a pressure difference in the chamber (1).

8. The row unit (100) according to Claim 7, **characterized in that** the web (12) has at least one of the following features:
- the web (12) is arranged upstream of the discharge region (5) in the direction of rotation of the singulating disc (4),
- the web (12) extends in the chamber (1),
- the web (12) is spaced apart at least in sections from the singulating disc (4) in order to permit a passage for grains, and/or
- the web (12) serves in a non-operating position as a blocking bar for the grains.

9. The row unit (100) according to one of the preceding claims, **characterized in that** the row unit (100) is pivotable into a non-operating position in which it
- is oriented lying substantially horizontally such that the reference axis (X) preferably likewise runs substantially horizontally, and/or
- is oriented standing substantially vertically such that the reference axis (X) preferably likewise runs substantially vertically.

10. The row unit (100) according to one of the preceding claims, **characterized in that** the row unit (100) comprises at least one of the following:
- a mounting device (6), preferably a pivoting and/or parallelogram-type mounting construction, for the movable mounting on a support construction (201, 202) of a mobile agricultural working implement (200),
- a dispensing tube (7) for connecting to the discharge region (5) and for dispensing singulated grains onto the ground, preferably into a furrow in the ground,
- a furrow-producing device (8) for producing a furrow in the ground,
- a catching or braking device (9) for catching or braking singulated grains discharged from the dispensing tube (7),
- a device (10) for closing the furrow provided with grains and/or for pressing singulated grains into the ground, in particular in a furrow in the ground, and/or
- a storage container (11) for grains, which can be mounted above the singulating assembly (50) and serves for supplying the receiving region (2) with grains.

11. The row unit (100) according to Claim 10, **characterized in that** an inlet of the dispensing tube (7) and an outlet of the dispensing tube (7) are arranged offset from one another in the transverse direction (Q) of the row unit (100), and/or a centre axis (F) of the dispensing tube (7) extends in three dimensions from the inlet to the outlet of the dispensing tube (7).

12. A support construction (201, 202), preferably support construction (201, 202) of a mobile agricultural working implement (200), with a first support (201) on the one side and with a second support (202) on the other side, wherein the first support (201) has a multiplicity of row units (100) and the second support (202) has a multiplicity of row units (100) according to one of the preceding claims.

13. The support construction (201, 202) according to Claim 12, **characterized in that** the singulating assemblies (50) of the row units (100) of the first support (201) and the singulating assemblies (50) of the row units of the second support (202) are structurally identical at least with respect to the singulating discs (4), the chambers (1), the webs (12) and/or the chamber walls (13).

14. The support construction (201, 202) according to Claim 12 or 13, **characterized in that** the first support (201) and the second support (202) are pivotable by means of at least one pivoting operation in order to reduce the width of the support construction (201, 202), and therefore the individual row units (100) of the first support (201) and the individual row units (100) of the second support (202) thereby pass into a non-operating position, wherein, despite the pivoting operation, the singulating assemblies (50) of the first support (201) and the singulating assemblies (50) of the second support (202) do not take up a position in which grains inadvertently escape from the individual chambers (1).

15. The support construction (201, 202) according to one of Claims 12 to 14, **characterized in that**
- the singulating discs (4) of the individual row units (100) of the first support (201) in a non-operating position serve as ramps, rising towards the individual discharge regions (5), for the grains in order, in a non-operating position, to prevent an inadvertent escape of grains from the chambers (1), and
- the chamber walls (13) of the individual row units (100) of the second support (202) in a non-operating position serves as ramps, which drop towards the individual discharge regions (5), for the grains.

16. The support construction (201, 202) according to one of Claims 12 to 15, **characterized in that**, in the non-operating position, at least one of the following features is implemented:
- the individual row units (100) of the first support (201) can be arranged one above another and the individual row units (100) of the second support (202) can be arranged one above another,
- the individual row units (100) of the first support (201) and the individual row units (100) of the second support (202) can be aligned lying substantially horizontally,
- the individual row units (100) of the first support (201) and the individual row units (100) of the second support (202) are pivoted about pivot axes running within a tolerance range of +/- 10° parallel to the reference axis (X), preferably by more than 80°, in particular by substantially 90°.

17. The support construction (201, 202) according to one of Claims 12 to 16, **characterized in that**, in the non-operating position, at least one of the following features is implemented:
- the individual row units (100) of the first support (201) can be arranged one behind another and the individual row units (100) of the second support (202) can be arranged one behind another,
- the individual row units (100) of the first support (201) and the individual row units (100) of the second support (202) can be oriented standing substantially vertically,
- the individual row units (100) of the first support (201) and the individual row units (100) of the second support (202) are pivoted about pivot axes running within a tolerance range of +/- 10° parallel to the transverse direction (Q) of the row units (100), preferably by more than 80°, in particular by substantially 90°.

## Revendications

1. Unité de rangée (100), de préférence unité de rangée (100) destinée au montage sur une structure porteuse (201, 202) d'un engin de travail (200) agricole mobile, en particulier pour tirer l'unité de rangée (100), dans laquelle l'unité de rangée (100) sert dans la position de fonctionnement à répartir des grains et peut être pivotée dans une position de non-fonctionnement avec :
au moins un groupe de tri (50), dans laquelle le groupe de tri (50) présente un compartiment (1) avec une zone de réception (2) pour recevoir les grains et un disque de tri (4) pouvant tourner autour d'un axe de rotation (3), dans laquelle le disque de tri (4) sert à trier les grains et de préférence à transporter les grains depuis la zone de réception (2) vers une zone de distribution (5) pour distribuer les grains depuis le groupe de tri (50),
dans laquelle
le disque de tri (4) est orienté de manière oblique par rapport à un axe de référence (X) et l'axe de référence (X) s'étend dans le sens longitudinal (L) de l'unité de rangée (100) à travers l'unité de rangée (100) et s'étend, dans la position de fonctionnement de l'unité de rangée (100), parallèlement au sens de déplacement (V) de l'unité de rangée (100), et
dans laquelle le groupe de tri (50) présente seulement un unique disque de tri (4).

2. Unité de rangée (100) selon la revendication 1, **caractérisée en ce que** l'axe de référence (X)
- correspond à un axe central de l'unité de rangée (100),
- s'étend de manière horizontale dans la position de fonctionnement de l'unité de rangée (100),
- coupe l'axe de rotation (3), et/ou
- coupe un point central de rotation du disque de tri (4).

3. Unité de rangée (100) selon l'une quelconque des revendications précédentes, **caractérisée en ce que** le disque de tri (4) est orienté en étant situé de manière sensiblement verticale dans la position de fonctionnement, le disque de tri (4) n'est pas orienté parallèlement à l'axe de référence (X) et/ou l'axe de rotation (3) s'étend de manière oblique et ainsi pas à angle droit par rapport à l'axe de référence (X).

4. Unité de rangement (100) selon l'une quelconque des revendications précédentes, **caractérisée en ce que** malgré le pivotement de l'unité de rangée (100) dans une position de non-fonctionnement, le groupe de tri (50) n'adopte aucune position, dans laquelle des grains s'échappent accidentellement hors du compartiment (1), à savoir indépendamment du fait de savoir si l'unité de rangée (100) est pivotée vers un premier côté dans une position de non-fonctionnement ou est pivotée vers un deuxième côté dans une position de non-fonctionnement.

5. Unité de rangée (100) selon l'une quelconque des revendications précédentes, **caractérisée en ce que** l'unité de rangée (100) peut être pivotée, de préférence vers un premier côté, dans une position de non-fonctionnement, dans laquelle le disque de tri (4) fait office de rampe ascendante en direction de la zone de distribution (5) pour les grains pour empêcher que les grains ne s'échappent accidentellement hors du compartiment (1).

6. Unité de rangée (100) selon l'une quelconque des revendications précédentes, **caractérisée en ce que** l'unité de rangée (100) peut être pivotée, de préférence vers un deuxième côté, dans une position de non-fonctionnement, dans laquelle la paroi de compartiment (13) fait office de rampe descendante en direction de la zone de distribution (5) pour les grains.

7. Unité de rangée (100) selon l'une quelconque des revendications précédentes, **caractérisée en ce que** le groupe de tri (50) présente une entretoise (12) pour empêcher que les grains ne s'échappent accidentellement hors du compartiment (1) dans une position de non-fonctionnement et/ou pour réduire une différence de pression dans le compartiment (1).

8. Unité de rangée (100) selon la revendication 7, **caractérisée en ce que** l'entretoise (12) présente au moins une des caractéristiques suivantes :
- l'entretoise (12) est disposée dans la direction de rotation du disque de tri (4) devant la zone de distribution (5),
- l'entretoise (12) s'étend dans le compartiment (1),
- l'entretoise (12) est tenue au moins par endroits à distance du disque de tri (4) pour permettre un passage pour des grains, et/ou
- l'entretoise (12) fait office dans une position de non-fonctionnement de verrou de blocage pour les grains.

9. Unité de rangée (100) selon l'une quelconque des revendications précédentes, **caractérisée en ce que** l'unité de rangée (100) peut être pivotée dans une position de non-fonctionnement, dans laquelle elle
- est orientée de manière à être située de manière sensiblement horizontale de sorte que de préférence l'axe de référence (X) s'étend également de manière sensiblement horizontale, et/ou
- est orientée de manière à être située de manière sensiblement verticale de sorte que de préférence l'axe de référence (X) s'étend également de manière sensiblement verticale.

10. Unité de rangée (100) selon l'une quelconque des revendications précédentes, **caractérisée en ce que** l'unité de rangée (100) comprend au moins un des éléments suivants :
- un dispositif de montage (6), de préférence une structure de montage pivotante et/ou en parallélogramme, pour le montage mobile sur une structure porteuse (201, 202) d'un engin de travail (200) agricole mobile,
- un tuyau de livraison (7) destiné à être relié à la zone de distribution (5) et pour distribuer des grains triés sur le sol, de préférence dans un sillon dans le sol,
- un dispositif de production de sillons (8) pour produire un sillon dans le sol,
- un dispositif d'interception ou de ralentissement (9) pour intercepter ou ralentir des grains triés distribués depuis le tuyau de livraison (7),
- un dispositif (10) pour fermer le sillon pourvu de grains et/ou pour presser des grains triés dans le sol, en particulier dans un sillon dans le sol,
et/ou
- un réservoir (11) pour des grains, qui peut être monté au-dessus du groupe de tri (50) et sert à alimenter la zone de réception (2) en grains.

11. Unité de rangée (100) selon la revendication 10, **caractérisée en ce qu'**une entrée du tuyau de livraison (7) et une sortie du tuyau de livraison (7) sont disposées de manière décalée l'une par rapport à l'autre dans le sens transversal (Q) de l'unité de rangée (100) et/ou un axe central (F) du tuyau de livraison (7) s'étend dans trois dimensions depuis l'entrée vers la sortie du tuyau de livraison (7).

12. Structure porteuse (201, 202), de préférence structure porteuse (201, 202) d'un engin de travail (200) agricole mobile, avec un premier support (201) sur un côté et un deuxième support (202) sur l'autre côté, dans laquelle le premier support (201) présente une multitude d'unités de rangée (100) et le deuxième support (202) présente une multitude d'unités de rangée (100) selon l'une quelconque des revendications précédentes.

13. Structure porteuse (201, 202) selon la revendication 12, **caractérisée en ce que** les groupes de tri (50) des unités de rangée (100) du premier support (201) et les groupes de tri (50) des unités de rangée du deuxième support (202) sont réalisés avec une structure identique au moins par rapport aux disques de tri (4), aux compartiments (1), aux entretoises (12) et/ou aux parois de compartiment (13).

14. Structure porteuse (201, 202) selon la revendication 12 ou 13, **caractérisée en ce que** le premier support (201) et le deuxième support (202) peuvent être pivotés au moyen d'au moins une opération de pivotement pour réduire la largeur de la structure porteuse (201, 202) de sorte qu'ainsi les diverses unités de rangée (100) du premier support (201) et les diverses unités de rangée (100) du deuxième support (202) parviennent dans une position de non-fonctionnement, dans laquelle malgré l'opération de pivotement, les groupes de tri (50) du premier support (201) et les groupes de tri (50) du deuxième support (202) n'adoptent aucune position, dans laquelle des grains s'échappent accidentellement hors des divers compartiments (1).

15. Structure porteuse (201, 202) selon l'une quelconque des revendications 12 à 14, **caractérisée en ce que**
- les disques de tri (4) des diverses unités de rangée (100) du premier support (201) font office dans une position de non-fonctionnement de rampes ascendantes en direction des diverses zones de distribution (5) pour les grains pour empêcher que des grains ne s'échappent accidentellement hors des compartiments (1) dans une position de non-fonctionnement, et
- les parois de compartiment (13) des diverses unités de rangée (100) du deuxième support (202) font office dans une position de non-fonctionnement de rampes descendantes en direction des diverses zones de distribution (5) pour les grains.

16. Structure porteuse (201, 202) selon l'une quelconque des revendications 12 à 15, **caractérisée en ce que** dans la position de non-fonctionnement, au moins une des caractéristiques suivantes est remplie :
- les diverses unités de rangée (100) du premier support (201) peuvent être disposées les unes au-dessus des autres et les diverses unités de rangée (100) du deuxième support (202) peuvent être disposées les unes au-dessus des autres,
- les diverses unités de rangée (100) du premier support (201) et les diverses unités de rangée (100) du deuxième support (202) peuvent être orientées de manière à être situées de manière sensiblement horizontale,
- les diverses unités de rangée (100) du premier support (201) et les diverses unités de rangée (100) du deuxième support (202) sont pivotées autour d'axes de pivotement s'étendant dans une plage de tolérances de +/-10° parallèlement aux axes de référence (X), de préférence de plus de 80°, en particulier de sensiblement 90°.

17. Structure porteuse (201, 202) selon l'une quelconque des revendications 12 à 16, **caractérisée en ce que** dans la position de non-fonctionnement, au moins une des caractéristiques suivantes est remplie :
- les diverses unités de rangée (100) du premier support (201) peuvent être disposées les unes après les autres et les diverses unités de rangée (100) du deuxième support (202) peuvent être disposées les unes après les autres,
- les diverses unités de rangée (100) du premier support (201) et les diverses unités de rangée (100) du deuxième support (202) peuvent être orientées de manière à être situées de manière sensiblement verticale,
- les diverses unités de rangée (100) du premier support (201) et les diverses unités de rangée (100) du deuxième support (202) sont pivotées d'axes de pivotement s'étendant dans une plage de tolérances de +/-10° parallèlement au sens transversal (Q) des unités de rangée (100), de préférence de plus de 80°, en particulier de sensiblement 90°.
